(19) Europäisches Patentamt
European Patent Office
Office européen des brevets

(11) EP 2 056 133 A1

(12) EUROPEAN PATENT APPLICATION
published in accordance with Art. 153(4) EPC

(43) Date of publication:
**06.05.2009 Bulletin 2009/19**

(21) Application number: **07742000.8**

(22) Date of filing: **19.04.2007**

(51) Int Cl.:
***G02B 5/30*** *(2006.01)* ***B60J 1/00*** *(2006.01)*
***B60J 3/06*** *(2006.01)* ***C03C 17/22*** *(2006.01)*
***C03C 17/28*** *(2006.01)* ***C03C 27/12*** *(2006.01)*

(86) International application number:
**PCT/JP2007/058564**

(87) International publication number:
**WO 2008/023477 (28.02.2008 Gazette 2008/09)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **25.08.2006 JP 2006228779**

(71) Applicant: **FUJIFILM Corporation**
**Minato-ku**
**Tokyo 106-8620 (JP)**

(72) Inventors:
- **KAMADA, Koh**
  **Kanagawa 258-8577 (JP)**
- **MATSUNAMI, Yuki**
  **Kanagawa 258-8577 (JP)**

(74) Representative: **HOFFMANN EITLE**
**Patent- und Rechtsanwälte**
**Arabellastrasse 4**
**81925 München (DE)**

# (54) GLASS

(57) There is provided a glass which contains a base, and a polarizing layer containing at least a polarizer, wherein the polarizer has an aspect ratio of 1.5 or more, and a major axis of the polarizer is obliquely orientated relative to a surface of the glass base.

FIG. 3

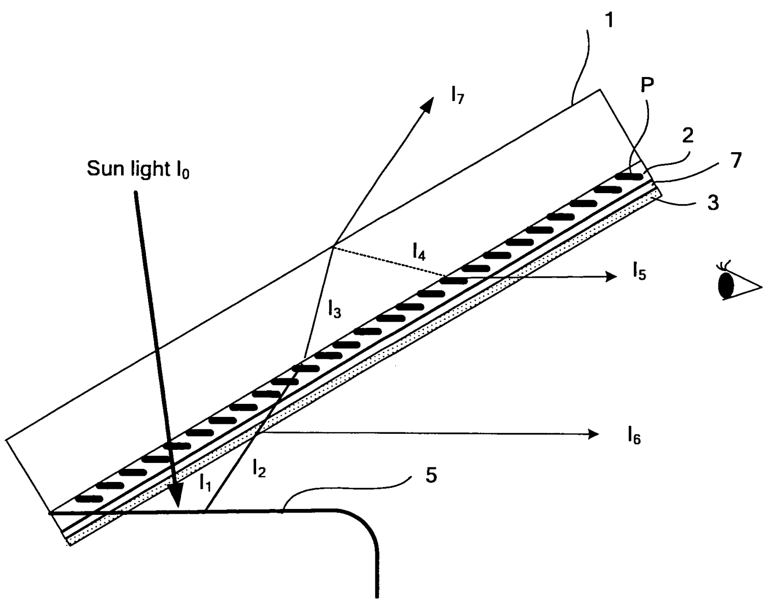


EP 2 056 133 A1

**Description**

Technical Field

The present invention relates to a glass suitably used for a windshield of a means of traveling such as a car, and capable of preventing reflections of images (shadows) of interior structures due to background reflections.

Background Art

There has been a safety issue at the time of driving a car such that the visibility of driver is reduced during day as a result of the reflections of the interior structures such as a dashboard or the like on a windshield of the car. Moreover, contrary to the currently increasing needs for ascetic designs such as use of colors or patterns in a compartment of a car, there still has an inconvenience such that only dark colors can be used for the design of the area around the dashboard due to the problems of background reflections.

To overcome this problem, there has been proposed a laminated glass wherein two glass panels, each coated with an antireflection layer, are laminated so that the antireflection layers face outside, for example, in Patent Literature 1.

Moreover, Patent Literature 2 discloses a reflection-reduced glass for a vehicle, wherein, on at least one surface of a transparent glass substrate, a thin film layer having a refractive index n1 of 1.8 to 1.9 and a thickness of 700Å to 900 Å is laminated as a first layer from the glass surface, a thin film layer having a refractive index n2 of 1.4 to 1.5 and a thickness of 1,100Å to 1,300 Å is laminated as a second layer on the thin film of the first layer, and wherein the reflection on the surface of the thin film layer is reduced at 4.5% to 6.5% with respect to the incident visible light which is incident on the thin film layer at an incident angle of 50 degrees to 70 degrees to the vertical light of the surface.

In case where the low reflection treatment is performed on the outer surface of the windshield for a vehicle as in Patent Literatures 1 and 2, however, the outer surface of the windshield is rubbed by windshield wiper which is used so as to maintain a visibility at the time of driving for safety, then the low reflection treated film is worn out, and therefore it causes a problem such that the characteristics of the optical thin film utilizing interference of light cannot be maintained. The outer surface-treated windshield of a car has another problem in terms of durability such that the depositions of dirt or the like significantly increases the reflectance due to the change in the conditions of light interference, and the depositions of the dirt becomes visible. If only one side is treated for antireflection, moreover, the backside reflection from the other surface which is not antireflection treated is remained, and the total effect of antireflection is limited to the reduction of approximately 30%, which is not sufficiently satisfactory performance.

Patent Literature 1: Japanese Utility Model Application Laid-Open (JP-U) No. 05-69701
Patent Literature 2: Japanese Patent Application Laid-Open (JP-A) No. 04-357134

Disclosure of Invention

An object of the present invention is to provide a glass, which is suitably used as a windshield of a means of traveling such as a car, improves a safety as a result of significantly improving the total effect of antireflection of images (shadows) of a structure inside a car due to background reflections, has an excellent light fastness, and improves aesthetic designs of dashboard by preventing reflections of the images of the structures inside the car due to background reflections.

The means for solving the aforementioned problems are as follows:

<1> A glass containing a base, and a polarizing layer containing at least a polarizer, wherein the polarizer has an aspect ratio of 1.5 or more, and a major axis of the polarizer is obliquely orientated relative to a plane of the glass base.
<2> The glass according to <1>, wherein the major axis of the polarizer is orientated at an angle of ±30 degrees or more but less than ±80 degrees relative to the plane of the base.
<3> The glass according to any one of <1> or <2>, wherein the polarizer is aligned at one direction in a plane of the polarizing layer, and the plane of the polarizing layer is vertical to the plane of the base.
<4> The glass according to any one of <1> to <3>, wherein the polarizing film is disposed on a side of the base opposite to a side thereof on which sun light is incident.
<5> The glass according to any one of <1> to <3>, wherein the base is a laminated glass which comprises two sheets of plate glass and an intermediate layer disposed between the two sheets of plate glass, and wherein the intermediate layer is the polarizing layer.
<6> The glass according to any one of <1> to <5>, wherein the glass further contains an antireflection film disposed on an outermost surface at a side of the base opposite to a side thereof on which sun light is incident.
<7> The glass according to <6>, wherein the glass further comprises a half-wave plate or a quarter-wave plate

deposed between the polarizing layer and the antireflection film.

<8> The glass according to any one of <1> to <7>, wherein the glass is applied for a windshield of a means of traveling.

<9> The glass according to <8>, wherein the means of traveling is a car.

<10> The glass according to any one of <8> or <9>, wherein the windshield is tilted at an angle of 20 degrees to 50 degrees relative a horizontal standard plane.

<11> The glass according to any one of <8> to <10>, wherein the major axis of the polarizer is orientated at an angle of ± 30 degrees relative a visual line of a driver of the car towards the windshield.

<12> The glass according to any one of <1> to <11>, wherein the polarizer contains an anisotropic absorbing material.

<13> The glass according to <12>, wherein the anisotropic absorbing material is an anisotropic metal nanoparticle, or a carbon nanotube.

<14> The glass according to <13>, wherein a material of the anisotropic metal nanoparticle is at least one selected from the group consisting of gold, silver, copper and aluminum.

The glass of the present invention contains a base and a polarizing layer containing at least a polarizer, wherein the polarizer has an aspect ratio of 1.5 or more and a major axis of the polarizer is obliquely orientated respect to a surface of the base. Owing to this configuration, the glass has excellent light fastness, is suitably used for a windshield of a means of traveling such as a car, and prevents reflection of images (shadows) inside the car due to background reflections.

Brief Description of Drawings

FIG. 1A is a plane view showing an orientation state of the anisotropic absorber on a horizontal plane of the polarizing film for a window.

FIG. 1B is a cross-sectional view showing a section indicated with the line A-A in FIG. 1A.

FIG. 1C is a cross-sectional view showing a section indicated with the line B-B in FIG. 1A.

FIG. 1B is another cross-sectional view showing a section indicated with the line B-B in FIG. 1A.

FIG. 2 is a graph showing an absorption spectrum of the anisotropic metal nanorod.

FIG. 3 is a diagram illustrating a mechanism for preventing background reflections in the case where one embodiment of the glass according to the present invention is provided as a windshield of a car.

FIG. 4 is a diagram showing a mechanism for preventing background reflections in the case where another embodiment of the glass according to the present invention is provided as a windshield of a car.

FIG. 5 is a graph showing a shift of a reflectance when light is incident on a medium having a refractive index of 1.46 via a medium having a refractive index of 1.

FIG. 6 is a diagram showing an embodiment in which the polarizing layer is disposed as an intermediate layer of a laminated glass.

FIG. 7 is a diagram showing an embodiment in which the polarizing layer is disposed on one side of a laminated glass.

FIG. 8 is a diagram explaining a method for evaluating the background reflections in Examples.

Best Mode for Carrying Out the Invention

(Glass)

The glass of the present invention contains a base and a polarizing layer, and optionally contains an antireflection film, a half-wave plate, a quarter-wave plate, and other layers as needed.

<Base>

As the base, glass (namely a glass base) is the most suitable. This is because glass has the best performance in that it has 12-year durability, which is the roughly-estimated operating life of a means of traveling under environments where they are exposed to wind and rain and do not disturb the polarization. However, recently, plastics, which have high-durability and high-isotropy and rarely disturb polarization, for example norbornene polymers, are provided in the form of polymer plate products. Materials other than glass can be also used for the base.

-Glass base-

The glass base is suitably selected depending on the intended purpose without any restriction. Examples

thereof include a single-layered glass, laminated glass, reinforced laminated glass, multi-layered glass, reinforced multi-layered glass, laminated multi-layered glass, and the like.

Examples of a plate glass constituting such the glass base include a transparent plate glass, template glass, wire-included plate glass, line-included plate glass, reinforced plate glass, heat reflecting glass, heat absorbing glass, Low-E plate glass, and other various plate glasses.

The glass base may be a transparent colorless glass or a transparent colored glass as long as it is a transparent glass.

The thickness of the base glass is suitably adjusted depending on the intended purpose without any restriction. It is preferably 2 mm to 20 mm and more preferably 4 mm to 10 mm.

-Laminated glass-

The laminated glass is formed in a unit structure in which an intermediate layer is disposed in between two sheets of plate glass. Such a laminated glass is widely used as a windshield of means of traveling such as a car and a windowpane for a building and the like, since it is safe and does not generate any broken pieces of glass to fly apart at the time when an external impact is applied thereto. In a case of the laminated glass for a car, a fairly thin laminated glass has been used for the purpose of weight saving, and one sheet of glass has a thickness of 1 mm to 3 mm, and two sheets of them are laminated via an adhesive layer having a thickness of 0.3 mm to 1 mm, thereby forming a laminated glass having a total thickness of about 3 mm to about 6 mm.

The aforementioned two sheets of plate glass may be suitably selected from the aforementioned varieties of the plate glass depending on the intended use.

Examples of thermoplastic resin to be used for the intermediate layer include polyvinyl acetal resin, polyvinyl alcohol resin, polyvinyl chloride resin, saturated polyester resin, polyurethane resin, ethylene-vinyl acetate copolymer, and the like. Among these, the polyvinyl acetal resin is preferable because it can form an intermediate layer that is excellent in a balance of various properties such as transparency, weather resistance, strength and bonding force. Polyvinyl butyral is particularly preferable.

The polyvinyl acetal resin is suitably selected depending on the intended purpose without any restriction. Examples thereof include polyvinyl formal resin that can be obtained by reacting polyvinyl alcohol (hereinafter occasionally abbreviated as PVA) with formaldehyde; narrowly defined polyvinyl acetal resin that can be obtained by reacting PVA with acetaldehyde; polyvinyl butyral resin (hereinafter occasionally abbreviated as PVB) that can be obtained by reacting PVA with n-butylaldehyde; and the like.

PVA used for synthesis of the polyvinyl acetal resin is suitably selected depending on the intended purpose without any restriction. For example, PVA having an average polymerization degree of 200 to 5,000 is preferably used, and a PVA having an average polymerization degree of 500 to 3,000 is more preferably used. When the average polymerization degree thereof is less than 200, the strength of the intermediate layer formed using an obtained polyvinyl acetal resin may be excessively weak. When the average polymerization degree is more than 5,000, troubles may occur when a polyvinyl acetal resin is formed.

The polyvinyl acetal resin is suitably selected depending on the intended purpose without any restriction. For example, the polyvinyl acetal resin preferably has an acetalization degree of 40 mol% to 85 mol%, and more preferably an acetalization degree of 50 mol% to 75 mol%. It may be difficult to synthesize polyvinyl acetal resin having an acetalization degree of less than 40 mol% or more than 85 mol% because of its reaction mechanism. The acetalization degree can be measured according to JIS K6728.

The intermediate layer contains the thermoplastic resin, and may further contain a plasticizer, a pigment, an adhesion adjustor, a coupling agent, a surfactant, an antioxidant, a thermal stabilizer, a light stabilizer, an ultraviolet absorbent, an infrared absorbent and the like, as needed.

The method of forming the intermediate layer is suitably selected depending on the intended purpose without any restriction. For example, a method is exemplified in which a composition containing a thermoplastic resin and other components is uniformly kneaded and then the kneaded product is formed into a sheet by a conventional method such as an extrusion method, calendering method, pressing method, casting method and inflation method.

The thickness of the intermediate layer is suitably adjusted depending on the intended purpose without any restriction. It is preferably 0.3 mm to 1.6 mm.

In the present invention, it is preferable that the intermediate layer is the polarizing layer (film) of the present invention in view of the productivity, durability, and the like. In the case where the intermediate layer is the polarizing film of the present invention, the configurations of the intermediate layer is the same to the mentioned above, provided that it contains the polarizer and the polarizer is substantially horizontally orientated. Moreover, the polarizing film may be disposed on one side of the laminated glass.

The production method of the laminated glass is suitably selected depending on the intended purpose without any restriction. For example, the intermediate layer is sandwiched with two sheets of transparent plate glass to form a

laminated glass structure, the laminated glass structure is put in a vacuum bag such as a rubber bag, the vacuum bag is connected to an exhaust system, the laminated glass structure is preliminarily bonded at a temperature of about 70°C to about 110°C while reducing the pressure and vacuuming or degassing so that the pressure in the vacuum bag is set as a depressurization degree of about -65 kPa to about -100 kPa, then the preliminarily bonded laminated glass structure is put in an autoclave, heated at a temperature of 120°C to 150°C and pressurized under a pressure of 0.98MPa to 1.47MPa to actually bond it, thereby obtaining a desired laminated glass.

<Polarizing layer>

The polarizing layer contains at least a polarizer, and may further contain other substances such as a dispersant, solvent, binder resin and the like, as needed.

In the case where the glass is disposed so that sun light is incident on one side of the base, the polarizing layer is preferably disposed on the other side (back surface, inner surface) of the substrate on which the sun light is not incident. Alternatively, the polarizing layer may be disposed on both sides of the base.

-Polarizer-

The polarizer has an average aspect ratio of 1.5 or more, preferably 1.6 or more, more preferably 2.0 or more. When the average aspect ratio is 1.5 or more, a sufficient anisotropic absorbing effect is exhibited.

The aspect ratio of the polarizer is determined by measuring the major axis and minor axis of the polarizer, and calculating based upon the following formula:

$$(\text{a length of the major axis of the polarizer}) / (\text{a length of the minor axis of the polarizer})$$

The length of the minor axis of the polarizer is suitably adjusted depending on the intended purpose without any restriction, but it is preferably in the range of 1 nm to 50 nm, and more preferably in the range of 5 nm to 30 nm. The length of the major axis of the polarizer is suitably adjusted depending on the intended purpose without any restriction, but it is preferably in the range of 10 nm to 1,000 nm, and more preferably in the range of 10 nm to 100 nm.

In the present invention, the polarizer is orientated so that the major axis thereof is substantially oblique relative to a plane of the base (horizontal plane). By orientating the major axis of the polarizer to be substantially oblique relative to the plane of the base (horizontal plane), the polarizing layer is provided with characteristics such that both the transmittance of the layer and the polarizing characteristics of the transmitted light change depended on the azimuth angle of the incident ray.

The term "a plane of the base" denotes a surface (horizontal plane) of the base at the side on which the polarizing layer is disposed. In the case where the base is a laminated glass and the polarizing layer is an intermediate layer disposed between two sheets of plate glass, the aforementioned term denotes a surface (horizontal plane) of one of the two sheets of the plate glass on which the polarizing layer is disposed.

The term "oblique" means that the major axis of the polarizer is orientated at ±30 degrees or more but less than ±80 degrees relative to the plane (horizontal plane) of the glass base, preferably orientated at ±40 degrees or more but less than ±70 degrees. In the case where the angle between the major axis of the polarizer and the plane (horizontal plane) of the glass base is ±30 degrees or more, characteristics of obliquely orientated polarizer can be effectively functioned. Moreover, in the case where the aforementioned angle is less than ±80 degrees, effective anisotropic characteristics can be attained when the azimuth angle of the incident ray changes.

Note that, in the present specification and the attached claims, an angle "±A" denotes a range of -A degrees to +A degrees.

Hereinafter, the orientated state of the polarizer will be specifically described with reference to the drawings. FIG. 1A is a plane view showing the orientated state of the polarizer P in the polarizing layer 2. FIG. 1B is a cross-sectional view at the section shown with the line A-A in FIG. 1A. FIG. 1C is a cross-sectional view at the section shown with the line B-B in FIG. 1A. FIG. 1D is another cross-sectional view at the section shown with the line B-B in FIG. 1A.

As shown in FIGs. 1A-1C, the major axis of the polarizer P is obliquely (at approximately 45 degrees) orientated to the plane of the base (horizontal plane) S.

As shown with "a" in FIG. 1D, the major axis of the polarizer P is obliquely (at approximately 30 degrees) orientated relative to the plane of the base (horizontal plane). As shown with "b" in FIG. 1D, the major axis of the polarizer P is obliquely (at approximately 45 degrees) orientated relative to the plane of the base (horizontal plane). As shown

with "c" in FIG. 1D, the major axis of the polarizer P is obliquely (at approximately 75 degrees) orientated relative to the plane of the base (horizontal plane).

The polarizing layer is formed on a front face of the base in FIGs. 1A-1D, but it can also be formed on the back face of the base.

Moreover, the polarizer is preferably aligned at one direction on a plane of the polarizing layer when viewed from the vertical direction relative to the plane of the base. For example, it is aligned so that the arrangement of the plurality of the polarizer in the direction of the major axis thereof and a horizontal line of the plane of the polarizing layer are substantially parallel. In this case, an angle made between the arrangement of a plurality of the polarizer in the direction of the major axis and the horizontal line of the polarizing layer is preferably ±30 degrees or less, more preferably ±5 degrees or less, further preferably 0 degree (horizontal). In FIG. 1A, the arrangement of a plurality of the polarizer in the direction of the major axis is aligned to be parallel to the horizontal line B-B of the polarizing layer.

The orientation state where the major axis of the polarizer is obliquely to the plane of the polarizing layer can be confirmed by observing the cross-section of the polarizing layer under a transmission electron microscope (TEM).

The polarizer is suitably selected depending on the intended purpose without any restriction. Examples thereof include an anisotropic metal nanoparticle, carbon nanotube, metal complex and dichroic dye. Among these, the anisotropic metal nanoparticle and the carbon nanotube are particularly preferable.

- Anisotropic metal nanoparticle -

The anisotropic metal nanoparticle is a rod-like metal fine particle of nano-order, i.e. several nanometers to 100 nm. The rod-like metal fine particle means a particle having an aspect ratio (major axis length / minor axis length) of 1.5 or more.

Such an anisotropic metal nanoparticle exhibits surface plasmon resonance and has absorption peak(s) in the ultraviolet to infrared wavelength region. For example, an anisotropic metal nanoparticle having a minor axis length of 1 nm to 50 nm, a major axis length of 10 nm to 1,000 nm and an aspect ratio of 1.5 or more allows for changing the absorption peaks thereof between the minor axis direction and the major axis direction, and thus the polarizing film for a window in which such anisotropic metal nanoparticles are oriented in a substantially horizontal direction to the horizontal surface of the film functions as an anisotropic absorbing film.

FIG. 2 shows an absorption spectrum of an anisotropic metal nanoparticle having a minor axis length of 12.4 nm and a major axis length of 45.5 nm. The absorption peak of the minor axis of such an anisotropic metal nanoparticle resides near a wavelength of 530 nm and it appears red. The absorption peak of the major axis of the anisotropic metal nanoparticle resides near a wavelength of 780 nm and it appears blue.

Examples of metals for the anisotropic metal nanoparticles include gold, silver, copper, platinum, palladium, rhodium, osmium, ruthenium, iridium, iron, tin, zinc, cobalt, nickel, chrome, titanium, tantalum, tungsten, indium, aluminum and alloys thereof. Among these, gold, silver, copper and aluminum are preferable, and gold and silver are particularly preferable.

Hereinafter, as a preferred example of the anisotropic metal nanoparticle, a gold nanorod will be explained.

--Gold nanorod--

A production method of a gold nanorod is suitably selected depending on the intended purpose without any restriction. Examples thereof include (1) an electrolytic method, (2) a chemical reduction method, (3) a photoreduction method, and the like.

In accordance with the (1) electrolytic method [Y.-Y. Yu, S.-S. Chang, C.-L. Lee, C. R. C. Wang, J. Phys. Chem. B, 101,6661 (1997)], an aqueous solution containing a cationic surfactant is electrolyzed by passing a constant electric current through it, and a gold cluster is eluted from an anodic metal plate to generate a gold nanorod. As the surfactant, a tetra ammonium salt having a structure in which four hydrophobic substituents are bound to a nitrogen atom is used, and a compound that does not form autonomous molecular aggregate such as tetradodecyl ammonium bromide (TDAB) is further added thereto. When a gold nanorod is produced, the supply source of gold is a gold cluster eluted from an anodic gold plate, and no gold salt such as chlorauric acid is used. During electrolyzation, an anodic gold plate is irradiated with an ultrasonic wave, and a silver plate is immersed in the solution to accelerate the growth of the gold nanorod.

In the electrolytic method, the length of a gold nanorod to be produced can be controlled by changing the area of a silver plate to be immersed, separately from electrodes to be used. By controlling the length of a gold nanorod, the position of an absorption band of near-infrared light region can be set in between around 700 nm to around 1,200 nm. When reaction conditions are kept constant, a gold nanorod formed in a certain shape can be produced. However, because a surfactant solution to be used in electrolyzation is a complicated system containing an excess amount of tetra ammonium salt, cyclohexane and acetone and there is an indefinite element such as irradiation of an ultrasonic wave, it is difficult to theoretically analyze a cause-effect relationship between the shape of gold nanorod to be produced

and various preparation conditions and to optimize the preparation conditions of gold nanorod. Further, in terms of electrolyzation characteristics, it is not easy to intrinsically scale up, and thus electrolytic method is not suited for preparation of a large amount of gold nanorod.

In accordance with the (2) chemical reduction method [N.R. Jana, L. Gearheart, C. J. Murphy, J. Phys. Chem. B, 105,4065 (2001)], a chlorauric acid is reduced using $NaBH_4$ so as to generate a gold nanoparticle. The gold nanoparticle is used as a "seed particle" and the "seed particle" is made grow up in a solution to thereby obtain a gold nanorod. The length of the gold nanorod to be produced is determined depending on the quantitative ratio between the "seed particle" and the chlorauric acid to be added to a grown-up solution. The chemical reduction method allows for preparing a gold nanorod having a longer length than that produced by the (1) electrolytic method, and there has been reported a gold nanorod having a length longer than 1,200 nm and an absorption peak in near-infrared light region.

However, the chemical reduction method needs to prepare a "seed particle" and two reaction tanks and to subject it to a growth reaction. Generation of a "seed particle" ends in several minutes, however, it is difficult to increase the concentration of the gold nanorod to be produced. The concentration of generated gold nanorod is one-tenth or less of the concentration of a gold nanorod generated by the (1) electrolytic method.

In accordance with the (3) photoreduction method [F. kim, J.H. Song, P. Yang, J. Am. Chem. Soc., 124, 14316 (2002)], a chlorauric acid is added to the substantially same solution as used in the (1) electrolytic method, and the chlorauric acid is reduced by irradiation of ultraviolet ray. For the ultraviolet ray irradiation, a low-pressure mercury lamp is used. The photoreduction method allows for generating a gold nanorod without generating a seed particle, and for controlling the length of the gold nanorod by irradiation time of the ultraviolet ray, and has a characteristic in that the shape of the gold nanorod to be produced is uniformized. Further, the (1) electrolytic method needs fractionation of particles by centrifugal separation because a large amount of spherically shaped particles coexist after reaction, however, the photoreduction method needs no fractionation treatment because the method causes less amount of spherically shaped particles. The photoreduction method is excellent in reproducibility and enables to substantially surely obtain gold nanorods in same size by constant operation.

-Carbon nanotube-

The carbon nanotube is an elongated tubular carbon having a diber diameter of 1 nm to 1,000 nm, a length of 0.1 μm to 1,000 μm, and an aspect ratio of 100 to 10,000.

As the production method of the carbon nanotube, there have been known an arc discharge method, laser evaporation method, heat CVD method, plasma CVD method, and the like. Carbon nanotubes obtained by an arc discharge method or laser evaporation method are classified into a single-layer carbon nanotube (SWNT: Single-Wall Nanotube) formed from only one-layer of graphene sheet and a multi-layered carbon nanotube (MWNT: Maluti-Wall Nanotube) formed from a plurality of graphene sheets.

Moreover, in the heat CVD method or the plasma CVD method, mainly a multi-wall nanotube can be produced. The single-wall nanotube has a structure in which one graphene sheet is wrapped around a material in which carbon atoms are bound to each other in a hexagonal shape by the strongest bond called an SP2 bond.

The carbon nanotube (SWNT, MWNT) is a tubular material of 0.4 nm to 10 nm in diameter and 0.1 μm to several hundred micro meters in length, having a structure that one graphene sheet or several graphene sheets are rolled in a cylindrical shape. It has a unique characteristic in that it becomes a metal or a semiconductor depending on in which direction the graphene sheet(s) are rolled. Such a carbon nanotube has characteristics that light absorption and emission easily occurs in the longitudinal direction thereof but rarely occurs in the radial direction thereof, and can be used as an anisotropic absorbing material and an anisotropic scattering material.

The content of the polarizer in the polarizing layer is preferably 0.1% by mass to 90.0% by mass and more preferably 1.0% by mass to 30.0% by mass. When the content is 0.1% by mass or more, sufficient polarization performance can be obtained. When the content thereof in the polarizing layer is 90.0% by mass or less, a film formation of the polarizing film can be performed without any problems, and the transmittance of the polarizing film is maintained.

The polarizing layer contains other substances such as a dispersant, a solvent, a binder resin, and the like in accordance with the formation method (orientation method) of the polarizing layer, other than the polarizer.

The formation method of the polarizing layer can be suitably selected depending on the intended purpose without any restriction, provided that the major axis of the polarizer is orientated obliquely relative to the plane (horizontal plane) of the base. Examples of the formation method thereof include: (1) a guest-host liquid crystal method, (2) an aluminum anodization method (3) a drawing method, (4) a high shear coating method, (5) a Langmuir-Blodgett (LB) method, (6) a molding method, (7) a vapor deposition-drawing method, (8) an oblique deposition-plating method, and the like. Among these methods, (1) the guest-host liquid crystal method and (2) the aluminum anodization method are particularly preferred. (1) The guest-host liquid crystal method and (2) the aluminum anodization method will be precisely explained in the later descriptions of the formation method of the glass.

(3) Drawing method

In accordance with the drawing method, for example, the base is coated with a coating solution in which the polarizer is dispersed in a polymer solution, is heated to the glass transition temperature of the polymer contained in the coated film, and is subjected to one-axial drawing to thereby obtain a polarizing film in which the polarizer is obliquely orientated relative to the plane (horizontal plane) of the base.

(4) High shear coating method

A coating solution wherein the polarizer, and optionally the binder resin, solvent, surfactant or the like are dispersed is applied in accordance with a method which applies high shear at the time of coating by means of a slit coater, die coater or the like. In this manner, the polarizing film in which the polarizer is obliquely orientated relative to a horizontal plane of the film can be obtained.

(5) Langmuir-Blodgett (LB) method

The solution in which the polarizer is dispersed is spread onto the water surface, and the polarizer is floated on the water surface. Thereafter, the area of the water surface is decreased to thereby obtain a polarizing film in which the polarizer is obliquely orientated relative to the horizontal plane of the film.

(6) Molding method

The polarizer is applied on a surface of a base having convex-concaves or grooves of nano-order, to thereby obtain a polarizing film in which the polarizer is obliquely orientated relative to the plane (horizontal plane) of the base.

(7) Vapor deposition-drawing method

After depositing a metal thin film on a surface of a base by anisotropic Ar sputtering, the temperature of the base is elevated to the glass transition temperature thereof, and it is subjected to the drawing treatment to thereby obtain a polarizing film in which the anisotropic metal nanoparticle is obliquely orientated relative to the plane (horizontal plane) of the base.

(8) Oblique deposition-plating method

A surface of the base is subjected to sputtering of particles in a manner that the surface of the base and the incidence of the particles to be deposited make an angle of 40 degrees or less so as to form a metal oxide thin film in a state where there are spaces between deposition columns, and then these spaces are filled by metal plating to thereby form a polarizing film in which the polarizer is obliquely orientated relative to the plane (horizontal plane) of the base.

<Antireflection film>

In the case where the glass is disposed so that sun light is incident on one side of the base, an antireflection film is preferably disposed on at least a side of an outermost surface of the base where the sun light is not incident on. In the case where the glass is used as a windshield of a means of traveling, it is more preferable that the polarizing layer is disposed on a side of the base where sun light is not incident on (inner surface of the means of traveling), and the antireflection film is disposed on the polarizing layer.

The antireflection film is suitably selected depending on the intended purpose without any restriction, provided that it has sufficient durability and heat resistance for practical use and is capable of suppressing the reflectance to 5% or less at an incidence angle of 60 degrees. Examples thereof include (1) a film having fine convexoconcaves formed on the surface thereof, (2) a two-layered film structure using a combination of a film having a high refractive index and a film having a low refractive index, and (3) a three-layered film structure in which a film having a high refractive index, a film having a medium refractive index and a film having a low refractive index are sequentially formed in a laminate structure. Among these, the film (2) and the film (3) are particularly preferable.

Each of these antireflection films may be directly formed on a base surface by a sol-gel method, sputtering method, deposition method, CVD method or the like. Moreover, each of these antireflection films may be formed by forming an antireflection film on a transparent support by a dip coating method, air-knife coating method, curtain coating method, roller coating method, wire bar coating method, gravure coating method, micro-gravure coating method or extrusion coating method and making the formed antireflection film adhered on or bonded to the base surface.

The antireflection film preferably has a layer structure in which at least one layer having a higher refractive index than that of a low-refractive index layer (a high-refractive index layer) and the low-refractive index layer (the outermost surface layer) are formed in this order on a transparent support. When two layers of refractive index layers each having a higher refractive index than that of the low-refractive index layer are formed, a layer structure is preferable in which a medium refractive index layer, a high-refractive index layer and a low-refractive index layer (the outermost surface layer) are formed in this order on a transparent support. An antireflection film having such a layer structure is designed so as to have refractive indexes satisfying the relation of "a refractive index of a high- refractive index layer > a refractive index of a medium refractive index layer > a refractive index of a transparent support > a refractive index of a low-refractive index layer". Note that the respective refractive indexes are relative indexes.

-Transparent support-

As the transparent support, a plastic film is preferably used. Examples of a material of the plastic film include cellulose acylate, polyamide, polycarbonate, polyester (for example, polyethylene terephthalate, polyethylene naphthalate, etc.), polystyrene, polyolefin, polysulfone, polyether sulfone, polyarylate, polyetherimide, polymethyl methacrylate, polyether ketone, and the like.

- High-refractive index layer and medium refractive index layer -

The layer having a high-refractive index in the antireflection layer is preferably composed of a curable film containing inorganic fine particles having a high-refractive index and an average particle diameter of 100 nm or less, and a matrix binder.

The inorganic fine particle having a high-refractive index is an inorganic compound having a refractive index of 1.65 or more, and preferably an inorganic compound having a refractive index of 1.9 or more. Examples thereof include oxides of Ti, Zn, Sb, Sn, Zr, Ce, Ta, La, In and Al; and composite oxides containing these metal atoms. Among these, an inorganic fine particle which contains mainly titanium dioxide and at least one element selected from Co, Zr and Al (hereinafter, may be referred to as "specific oxide") is preferable, and a particularly preferable element is Co.

The total amount of Co, Al and Zr to the amount of Ti is 0.05% by mass to 30% by mass, preferably 0.1% by mass to 10% by mass, more preferably 0.2% by mass to 7% by mass, still more preferably 0.3% by mass to 5% by mass, and particularly preferably 0.5% by mass to 3% by mass.

Co, Al and Zr exist inside or on the surface of the inorganic fine particle mainly containing titanium dioxide. It is more preferable that Co, Al and Zr exist inside the inorganic fine particle mainly containing titanium dioxide, and it is still more preferable that Co, Al and Zr exist inside and on the surface of the inorganic fine particle mainly containing titanium dioxide. These specific metal elements may exist as oxides.

Further, another preferable inorganic fine particle is, for example, an inorganic fine particle which is a particle of a composite oxide composed of a titanium element and at least one metal element (hereinafter, occasionally abbreviated as "Met") selected from metal elements that will have a refractive index of 1.95 or more, and the composite oxide is doped with at least one metal ion selected from Co ion, Zr ion and Al ion (hereinafter, may be referred to as "specific composite oxide").

Here, examples of the metal elements of the metal oxide that will have a refractive index of 1.95 or more in the composite oxide include Ta, Zr, In, Nd, Sb, Sn and Bi. Of these, Ta, Zr, Sn and Bi are particularly preferable.

The amount of the metal ion doped into the composite oxide is preferably contained in a range not exceeding 25% by mass, more preferably 0.05% by mass to 10% by mass, still more preferably 0.1% by mass to 5% by mass, and particularly preferably 0.3% by mass to 3% by mass in the total amount of the metal [Ti and Met] constituting the composite oxide, from the viewpoint of maintaining refractive indexes.

The doped metal ion may exist as any of a metal ion and a metal atom and preferably exists in an appropriate amount from the surface of the composite oxide through the inside thereof. It is more preferable that the doped metal ion exist on the surface of and inside the composite oxide.

Examples of a production method of the fine particle as described above include a method of treating the particle surface with a surface treatment agent; a method of making a core shell structure in which a particle having a high-refractive index is used as the core, and a method of using a specific dispersing agent in combination.

Examples of the surface treatment agent used in the method of treating the particle surface therewith include the silane coupling agent described in JP-A Nos. 11-295503, 11-153703 and 2000-9908; and the anionic compound or organic metal coupling agent described in JP-A No. 2001-310432.

As the method of making the core shell structure using a high-refractive index particle as the core, the techniques described in JP-A No. 2001-166104 and U.S. Patent Application Publication No. 2003/0202137 can be used.

Furthermore, examples of the method of using a specific dispersing agent in combination include techniques described in Japanese Patent Application JP-A No. 11-153703, U.S. Patent No. 6210858 and JP-A No. 2002-2776069.

Examples of the material used for forming a matrix include conventionally known thermoplastic resins and curable resin films.

Moreover, it is preferable to use at least one composition selected from a polyfunctional compound containing compositions in which two or more radically polymerizable and/or cationic polymerizable groups are contained, a hydrolyzable group containing organic metal compounds, and partially condensate compositions thereof. Examples of the compositions include the compounds described in JP-A Nos. 2000-47004, 2001-315242, 2001-31871 and 2001-296401.

Furthermore, colloidal metal oxide obtainable from hydrolyzed condensate of metal alkoxide and a curable film obtainable from a metal alkoxide composition are also preferable. Examples thereof include the curable film described in JP-A No. 2001-293818.

The refractive index of the high-refractive index layer is preferably 1.70 to 2.20. The thickness of the high refractive index layer is preferably 5 nm to 10 μm and more preferably 10 nm to 1 μm.

The refractive index of the medium refractive index layer is controlled so as to be a value between the refractive index of the low refractive index layer and that of the high refractive index layer. The refractive index of the medium refractive index layer is preferably 1.50 to 1.70. The thickness of the medium refractive index layer is preferably 5 nm to 10 μm and more preferably 10 nm to 1 μm.

-Low-refractive index layer-

The low-refractive index layer is preferably laminated on the high-refractive index layer. The refractive index of the low-refractive index layer is preferably 1.20 to 1.55 and more preferably 1.30 to 1.50.

The low-refractive index layer is preferably structured as the outermost surface layer to obtain abrasion resistance and antifouling performance. As a method of greatly increasing abrasion resistance, it is effective to impart slippage to the outermost surface, and a thin layer doped with a silicone compound or a fluorine-containing compound is preferably used.

The refractive index of the fluorine-containing compound is preferably 1.35 to 1.50 and more preferably 1.36 to 1.47. For the fluorine-containing compound, a compound containing fluorine atom in the range of 35% by mass to 80% by mass and containing a crosslinkable or polymerizable functional group is preferable.

Examples thereof include the compounds described in paragraph Nos. [0018] to [0026] in JP-A No. 09-222503, paragraph Nos. [0019] to [0030] in JP-A No. 11-38202, paragraph Nos. [0027] to [0028] in JP-A No. 2001-40284, and JP-A Nos. 2000-284102 and 2004-45462.

As the silicone compound, a compound having a polysiloxane structure is preferably used. Among such compound, the one containing a curable functional group or a polymerizable functional group in a high-molecular chain to have a crosslinked structure in a film is particularly preferable. Examples thereof include reactive silicone, such as SYRAPLANE (manufactured by CHISSO CORPORATION), polysiloxane containing a silanol group at both ends thereof (JP-A No. 11-258403), and the like.

The crosslinking reaction or polymerization reaction of a polymer containing fluorine and/or siloxane having a crosslinkable or polymerizable group is preferably carried out by irradiating with light and/or heating a coating composition used for forming the outermost surface layer containing a polymerization initiator, a sensitizer and the like, at the same time of the coating process or after the coating process. As the polymerization initiator and the sensitizer, those known in the art can be used.

Furthermore, for the low-refractive index layer, a sol-gel cured film, which is cured by subjecting an organic metal compound such as a silane coupling agent and a silane coupling agent containing a specific fluorine-containing hydrocarbon group to a condensation reaction in co-presence of a catalyst, is preferable. Examples thereof include polyfluoroalkyl group-containing silane compounds or partially hydrolyzed condensates (such as the compounds described in JP-A Nos. 58-142958, 58-147483, 58-147484, 09-157582 and 11-106704); and silyl compounds containing a poly-perfluoroalkylether group that is a fluorine-containing long-chain group (such as the compounds described in JP-A Nos. 2000-117902, 2001-48590 and 2002-53804).

It is preferable that the low-refractive index layer contains a low-refractive index inorganic compound having an average primary particle diameter of 1 nm to 150 nm such as fillers (for example, silicon dioxide, silica; and fluorine-containing particles such as fluorinated magnesium, fluorinated calcium, and fluorinated barium) as additives other than those described above.

Particularly, it is preferable to use a hollow inorganic fine particle in the low-refractive index layer so as to further suppress the increase of refractive index. The refractive index of the hollow inorganic fine particle is preferably 1.17 to 1.40, more preferably 1.17 to 1.37, and furthermore preferably 1.17 to 1.35. The refractive index described here indicates a refractive index of an entire particle and does not indicate a refractive index of only the outer-shell forming the hollow inorganic fine particle.

The average particle diameter of the hollow inorganic fine particle in the low-refractive index layer is preferably 30% to 100%, more preferably 35% to 80%, and still more preferably 40% to 60% of the thickness of the low-refractive

index layer.

Specifically, when the thickness of the low-refractive index layer is 100 nm, the particle diameter of the inorganic fine particle is preferably 30 nm to 100 nm, more preferably 35 nm to 80 nm, and still more preferably 40 nm to 60 nm.

The refractive index of the hollow inorganic fine particle can be measured in the following manner that the hollow inorganic fine particles are mixed in a suitable matrix polymer to form a film.

The refractive index of the film is measured by means of Abbe Refractometer (manufactured by Atago Co., Ltd.).

As the other additives, the low-refractive index layer may contain the organic fine particles described in paragraph Nos. [0020] to [0038] of JP-A No. 11-3820, a silane coupling agent, a lubricant, a surfactant and the like.

When the low-refractive index layer is positioned as an under layer of the outermost surface layer, the low-refractive index layer may be formed by a gas-phase method (for example, a vacuum evaporation method, sputtering method, ion-plating method, and plasma CVD method), however, it is preferably formed by a coating method, in view of a low production cost.

The thickness of the low-refractive index layer is preferably 30 nm to 200 nm, more preferably 50 nm to 150nm, and still more preferably 60 nm to 120 nm.

<Half-wave plate and Quarter-wave plate>

The half-wave plate and quarter-wave plate are suitably selected depending on the intended purpose without any restriction. Examples thereof include a drawn polycarbonate film, a drawn norborne polymer film, a transparent film in which inorganic particles having birefringence, e.g. strontium carbonate etc., are orientated, a thin film in which an inorganic dielectric is oblique deposited, and the like.

The film can be made in either the half-wave plate or the quarter-wave plate, the selection thereof is made possible by adjusting the drawing ratio or thickness of the film and setting the birefringence of the film at the intended value.

Examples of the existing technologies for the half-wave plate and quarter-wave plate are: (1) a phase difference plate in which a birefringence film having a large retardation and a birefringence film having a small retardation are laminated so that optical axes thereof are perpendicularly crossed each other, as described in JP-A Nos. 05-27118 and 05-27119; (2) a phase difference plate capable of attaining a quarter-wavelength phase sift in a wide region of wavelength, in which a polymer film attaining a quarter-wavelength phase sift at a certain wavelength and a polymer film formed of the same material to that of the other polymer film and attaining a half-wavelength phase shift at the same wavelength are laminated, as described in JP-A No. 10-68816; (2) a phase difference plate capable of attaining a quarter-wavelength phase sift in wider region of wavelength, in which two polymer films are laminated, as described in JP-A No. 10-90521; (3) a phase difference plate capable of attaining a quarter-wavelength phase sift in a wide region of wavelength and using a modified polycarbonate film described in International Publication No. WO 00/26705; (4) a phase difference plate capable of attaining a quarter-wavelength phase sift in a wide region of wavelength and using a cellulose acetate film described in International Publication No. WO 00/65384; and the like.

The glass may contain other layers as required, and examples of such layers are a hard coat layer, a forward scattering layer, a primer layer, an antistatic layer, an undercoat layer, and the like.

<Production method of glass>

The first and second embodiments of the production method for the glass of the present invention contains at least a step for forming a polarizing layer, and optionally contains other steps.

-Step for forming the polarizing film in the first embodiment-

In the step for forming the polarizing layer in the first embodiment, a coating solution for the polarizing layer containing at least an ultraviolet curable liquid crystal compound, a polymer surfactant and an anisotropic absorber is coated on a base having an orientation film on the surface thereof, the coating solution is dried so as to form a coated layer, the coated layer is exposed with an ultraviolet ray while heating at the temperature at which a liquid crystal phase is expressed, to thereby form the polarizing layer in which the long axis of the polarizer is obliquely orientated relative to the plane of the base.

The step for forming the polarizing layer of the first embodiment is identical to (1) the guest-host liquid crystal method.

-Base-

In terms of the shape, structure, size and the like, the base is suitably selected depending on the intended purpose without any restriction. For example, the shape of the base may be selected from a plate, a sheet and the like,

and the structure thereof may be a single-layered structure or multi-layered structure. These configurations can be arbitrarily selected.

The material of the base is not particularly limited, and both an inorganic material and an organic material are suitable for use as the material of the base.

Examples of the inorganic material include glass, quartz, silicon, and the like.

Examples of the organic material include acetate resin such as triacetyl cellulose (TAC), polyester resin, polyether sulfone resin, polysulfone resin, polycarbonate resin, polyamide resin, polyimide resin, polyolefin resin, acrylic resin, polynorbornene resin, cellulose resin, polyarylate resin, polystyrene resin, polyvinyl alcohol resin, polyvinyl chloride resin, polyvinylidene chloride resin, polyacryl resin, and the like. These may be used singly or in combination of two or more, as the material of the base.

The base may be arbitrarily synthesized, or selected from the commercially available products.

The thickness of the base can be suitably adjusted depending on the intended purpose without any restriction. The thickness thereof is preferably from 10 μm to 500 μm, and more preferably 50 μm to 300 μm.

- Orientation film -

The orientation film is formed by depositing a film of polyimide, polyamideimide, polyetherimide, polyvinyl alcohol or the like on the surface of the base, and orientated by rubbing or the like. The rubbing is a method in which a drum, around which a velvet cloth woven with the short threads formed of rayon or cotton is wound, is made come to contact with the surface of the orientation film while rotating the drum. The orientation film subjected to the orientation treatment forms fine grooves on the surface thereof in one direction, and the liquid crystal is orientated so as to be in contact with the grooves.

The orientation film may be a film subjected to a photo-orientation treatment. In the photo-orientation, an anisotropy is generated on a surface of a photo-orientation film by irradiating photoactive molecules such as an azobenzene polymer, polyvinyl cinnamate or the like with a linearly polarized light or unpolarized light at a wavelength for causing a photochemical reaction, by effect of incident light an orientation of molecular major axis is generated in the outermost surface of the film, and a driving force is formed therein so as to orient a liquid crystal contacting with molecules in the outermost surface.

Examples of materials of the photo-orientation film include the above-mentioned materials, and further include materials capable of generating an anisotropy on a film surface by any one of reactions of photoisomerization, photodimerization, photocyclization, photocrosslinking, photodegradation, and photodegradation-bonding by irradiation of a linearly polarized light at a wavelength for causing a photochemical reaction of photoactive molecules. For example, it is possible to use various photo-orientation film materials described in "Journal of the Liquid Crystal Society of Japan, Vol. 3 No. 1, p. 3 (1999), by Masaki Hasegawa", "Journal of the Liquid Crystal Society of Japan, Vol. 3 No. 4, p. 262 (1999)" by Yasumasa Takeuchi" and the like.

When a liquid crystal is applied over the surface of an orientation film described above, the liquid crystal is oriented by using at least any of fine grooves on the orientation film surface and orientation of molecules in the outermost surface as a driving force.

The ultraviolet curable liquid crystal compound is suitably selected depending on the intended purpose without any restriction, provided that it has a polymerizable group and can be hardened by irradiation of ultraviolet ray. Although the examples shall not be limited thereto, the suitable examples thereof are the compounds represented by any one of the following structural formulas:

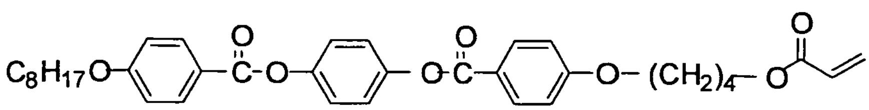

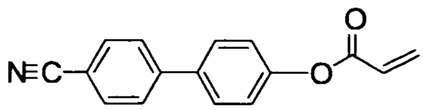

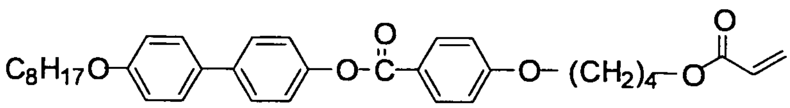

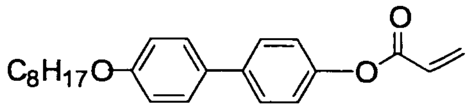

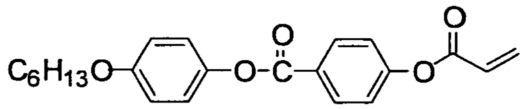

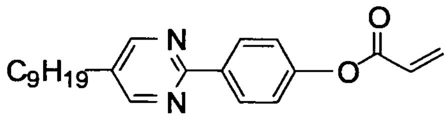

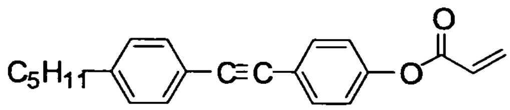

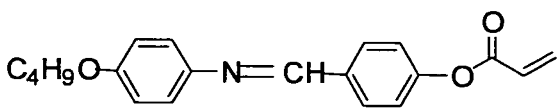

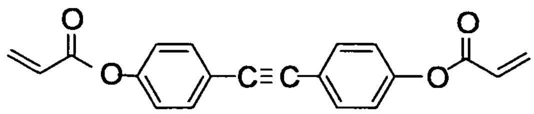

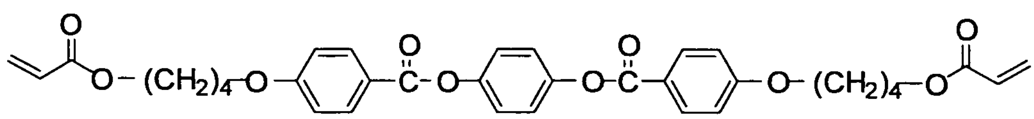

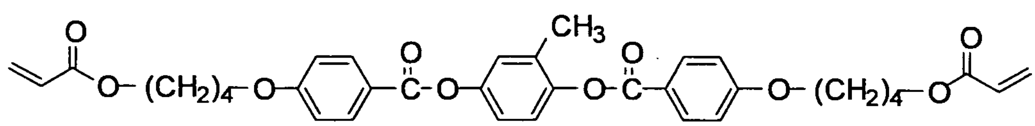

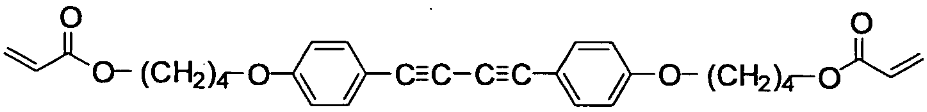

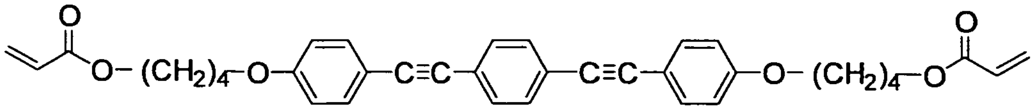

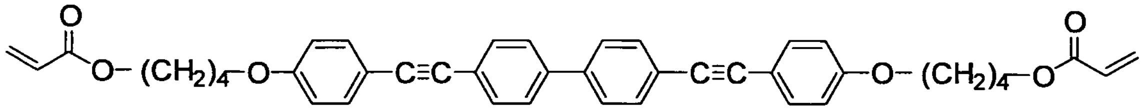

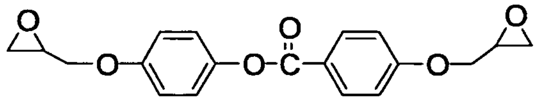

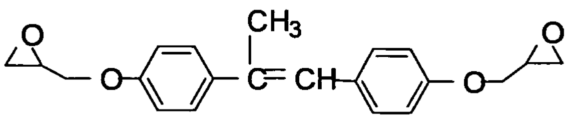

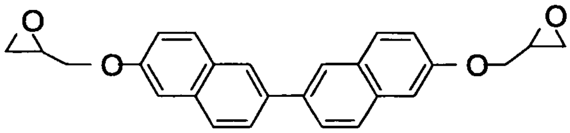

As the liquid crystal compound, commercially available products can be used. Examples of the commercially available products include PALIOCOLOR LC242 manufactured by BASF; E7 manufactured by Merck Ltd.; LC-SILICON-CC3767 manufactured by Wacker-Chemie; and L35, L42, L55, L59, L63, L79 and L83 manufactured by Takasago International Corporation.

The content of the liquid crystal compound is preferably 10% by mass to 90% by mass and more preferably 20% by mass to 80% by mass with respect to the total solid content of a coating solution of the polarizing layer.

-Polymer surfactant-

In order to obliquely orientate the major axis of the polarizer relative to the plane of the base, the liquid crystal layer serving as a medium thereof is also obliquely orientated. Spray orientation of the liquid crystal layer, in which the liquid crystal molecules are orientated so as to raise from the side of the orientation film to the interface with the air, may be formed by adjusting the terminals of the liquid crystal molecules to hydrophobic. However, the rising of the liquid crystal molecules adjacent to the interface with the air is insufficient and thus the effect for obliquely orientating the polarizer is weak. Therefore, the polymer surfactant having a strong conformity with the liquid crystal layer for use is selected and added to the liquid crystal layer so that the polymer surfactant is lifted at the time when the orientation is

matured and the liquid crystal molecules adjacent thereto are strongly vertically orientated. As a result, the orientation state of the entire liquid crystal layer becomes "spray orientation state", i.e. oblique orientation, where the molecules are horizontally orientated with a slight pre-tilt angle at the side of the orientation film, and the molecules are gradually raised to have a vertical orientation towards the interface of the air in the thickness direction.

As such polymer surfactant, nonionic surfactants are suitably used, and the one having a strong compatibility with a liquid crystal compound for use can be selected from the commercially available polymer surfactants. Suitably examples thereof include MEGAFACE F780F manufactured by DIC Corporation, and the like.

The content of the polymer surfactant is preferably 0.5% by mass to 8.0% by mass, and more preferably 1.0% by mass to 5.0% by mass with respect to total solid content (mass basis) of the coating solution of the polarizing layer.

The coating solution of the polarizing layer preferably contains a photopolymerization initiator. The photopolymerization initiator is not particularly limited and may be suitably selected from conventional photopolymerization initiators in accordance with the intended use. Examples thereof include p-methoxyphenyl-2,4-bis (trichloromethyl)-s-triazine, 2-(p-butoxystyryl)-5-trichloromethyl 1,3,4-oxadiazole, 9-phenylacrydine, 9,10-dimethylbenzphenazine, benzophenone/Michler's ketone, hexaarylbiimidazole/mercaptobenzimidazole, benzyldimethyl ketal, and thioxanthone/amine. These photopolymerization initiators may be used alone or in combination.

As the photopolymerization initiator, commercially available products can be used. Examples thereof include IRGACURE 907, IRGACURE 369, IRGACURE 784 and IRGACURE 814 manufactured by Chiba Specialty Chemicals K.K.; and LUCIRIN TPO manufactured by BASF.

The amount of the photopolymerization initiator is preferably 0.1% by mass to 20% by mass and more preferably 0.5% by mass to 5% by mass relative to the total solid content mass of the coating solution of the polarizing layer.

The coating solution of the polarizing layer may further contain a chiral agent as needed. The chiral agent enables to arbitrarily adjust orientation angle of the major axis of the polarizer relative to the plane of the base by adjusting the usage amount thereof.

The chiral agent is suitably selected from those known in the art depending on the intended purpose without any restriction. Examples thereof include an isomannide compound, a catechin compound, an isosorbide compound, a fechone compound, a carbon compound, and compounds represented by the formulae below. These may be used singly or in combination of two or more.

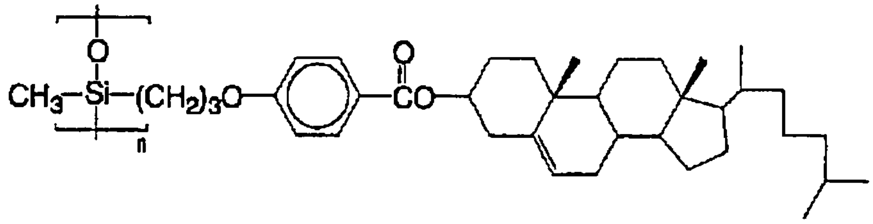

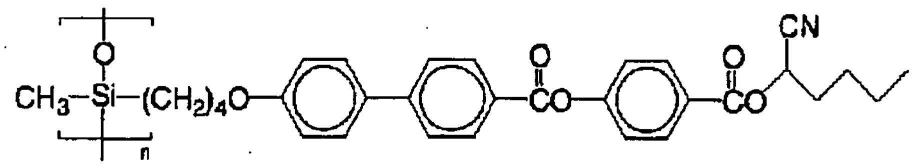

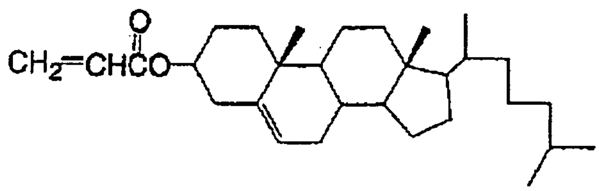

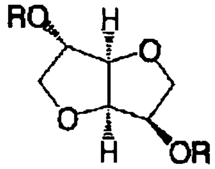

R =

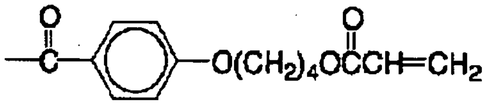

Left hand helix

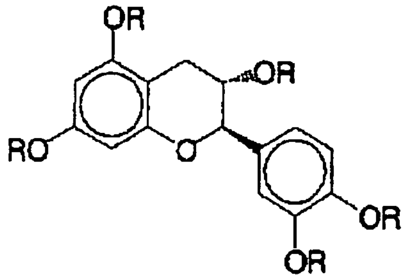

R =

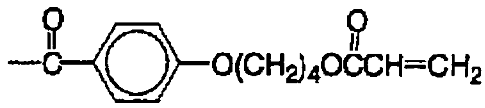

Left hand helix

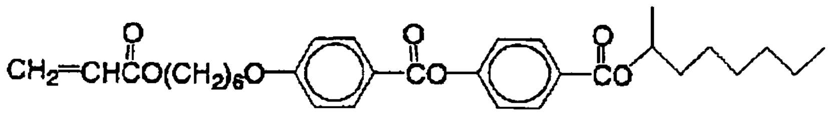

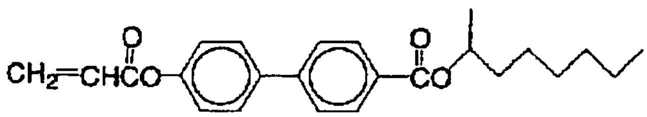

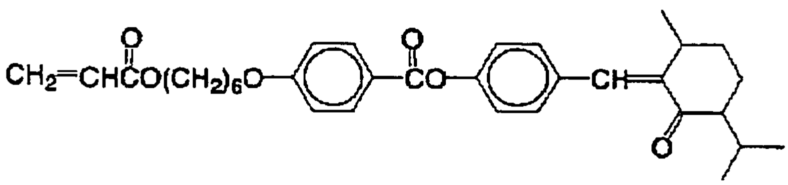

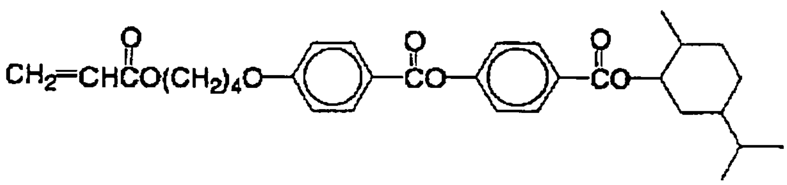

The chiral agent may be selected from the commercial products, and examples of the commercial products include: S101, R811, CB15 all manufactured by Merck Ltd.; PALIOCOLOR LC756 manufactured by BASF; and the like.

The content of the chiral agent is preferably 0% by mass to 30% by mass, and more preferably 0% by mass to 20% by mass with respect to the total solid content (mass basis) of the coating solution for the polarizing layer.

The coating solution of the polarizing layer can be prepared, for example, by dissolving and/or dispersing the ultraviolet curable crystal liquid compound, the anisotropic absorber, and arbitrarily selected other components depending on the intended purpose, in a suitable solvent. The solvent is suitably selected depending on the intended purpose without any restriction. Examples thereof include: halogenated hydrocarbons such as chloroform, dichloromethane, carbon tetrachloride, dichloroethane, tetrachloroethane, methylene chloride, trichloroethylene, tetrachloroethylene, chlorobenzene, and orthodichlorobenzene; phenols such as phenol, p-chlorophenol, o-chlorophenol, m-cresol, o-cresol, and p-cresoh aromatic hydrocarbons such as benzene, toluene, xylene, methoxybenzene, and 1,2-dimethoxybenzene; ketone solvents such as acetone, methyl ethyl ketone (MEK), methyl isobutyl ketone, cyclohexanone, cyclopentanone, 2-pyrrolidone, and N-methyl-2-pyrrolidone; ester solvents such as ethyl acetate and butyl acetate; alcohol solvents such as t-butyl alcohol, glycerine, ethylene glycol, triethylene glycol, ethylene glycol monomethylether, diethylene glycol dimethylether, propylene glycol, dipropylene glycol, and 2-methyl-2,4-pentandioh amide solvents such as dimethyl formamide and dimethylacetoamide; nitrile solvents such as acetonitrile and butylonitrile; ether solvents such as diethyl ether, dibutyl ether, tetrahydrofuran, and dioxane; and carbon disulfide, ethyl cellosolve and butyl cellosolve. These solvents may be used alone or in combination.

In order to fix the orientated state of the polarizer after coating the coating solution of the polarizing layer to a base on which an orientation film is disposed and drying so as to form a coated layer, ultraviolet ray is irradiated while hearing the coating layer at an temperature at which a liquid crystal phase is expressed. In this manner, the polarizing film for a window in which the major axis of the anisotropic absorber is substantially horizontally orientated to the horizontal plane of the polarizing film can be formed.

Examples of the coating methods include a spin-coating method, casting method, roller coating method, flow coating method, printing method, dip coating method, flow casting method, bar coating method and gravure coating method.

The curing may be thermal curing or photocuring, and photocuring is particularly preferable.

The conditions of the ultraviolet irradiation are suitably adjusted depending on the intended purpose without any restriction. For example, the wavelength of an ultraviolet light applied is preferably 160 nm to 380 nm, and more preferably 250 nm to 380 nm, and the irradiation time is 0.1 seconds to 600 seconds, and more preferably 0.3 seconds to 300 seconds. The conditions for the heating are suitably adjusted depending on the intended purpose without any restriction. For example, the heating temperature is preferably 60°C to 120°C.

Examples of a light source of the ultraviolet light include a low-pressure mercury lamp (e.g., a bactericidal lamp, fluorescent chemical lamp and black light), high-pressure discharge lamp (e.g., a high-pressure mercury lamp and metal halide lamp) and short-arc discharge lamp (e.g., an ultrahigh-pressure mercury lamp, xenon lamp and mercury xenon lamp).

-Second embodiment of polarizing layer forming step-

In the second embodiment of the polarizing layer forming step, aluminum is deposited on a base having a conductive film on a surface thereof while varying the deposition angle so as to form an aluminum deposition layer, the aluminum deposition layer is then anodized so as to form nanoholes therein, metal is deposited in the formed nanoholes by electroforming so as to form a metal nanorod having an aspect ratio of 1.5 or more, to thereby form a polarizing layer in which the major axis of the metal nanorod is obliquely orientated relative to the plane of the base.

The second embodiment of polarizing layer forming step is identical to (2) the aluminum anodization method.

The base is suitably selected depending on the intended purpose without any restriction provided that it is transparent, but it is preferably selected from the ones in the descriptions of the first embodiment.

-Conductive film-

The conductive film is suitably selected depending on the intended purpose without any restriction, provided that it is transparent and electrically conductive. Examples thereof include films of indium tin oxide (ITO), tin oxide (NESA), fluorine-doped tin oxide (FTO), indium oxide, zinc oxide, platinum, gold, silver, rhodium, copper, chrom, carbon, and the like. Among these, the film of fluorine-doped tin oxide (FTO) or indium tin oxide (ITO) is preferable in view of low surface resistance, excellent thermal resistance, chemical stability and high optical transmittance.

The conductive film is formed in accordance with a gas phase method, e.g. a vapor deposition method, sputtering method, ion plating method, plasma CVD method or the like.

The surface resistance of the conductive film is preferably 100 $\Omega/cm^2$ or less, and more preferably 10 $\Omega/cm^2$

or less.

The thickness of the conductive film is suitably adjusted depending on the intended purpose without any restriction. For example, the thickness thereof is preferably 1 nm to 500 nm, and more preferably 5 nm to 200 nm.

-Aluminum deposition layer-

The formation method of the aluminum deposition layer is suitably selected from methods known in the art without any restriction. Examples thereof include a deposition method, a sputtering method, and the like. The conditions for forming the aluminum deposition layer are suitably selected depending on the intended purpose without any restriction.

The tilted angle of the nanohole relative to the plane of the base changes accompanied with the change of the deposition angle at the time of depositing the aluminum deposition layer. Using this manner, the polarizing layer in which the major axis of the metal nanorod is obliquely orientated relative to the plane of the base can be formed.

Specifically, the deposited aluminum film having a thickness of approximately 100 nm is made anode, and the anodized aluminum film is oxidized in a 0.5 mol/l aqueous solution of oxalic acid using an appropriate metal base for the cathode to thereby form a nano-porous aluminum film. The thus obtained nano-porous aluminum film is washed with water and dried, and thereafter a metal nanorod is formed in the nanohole by electroforming.

The thickness of the aluminum deposition layer is suitably adjusted depending on the intended purpose without any restriction. For example, it is preferably 500 nm or less, and more preferably in the range of 5 nm to 200 nm.

-Anodization treatment-

The anodization treatment is curried out in an aqueous solution of sulfuric acid, phosphoric acid or oxalic acid by electrolysis etching the aluminum deposition film using an electrode in contact with the aluminum deposition film as the anode.

The type of electrolyte, concentration thereof, temperature thereof, duration and the like for the anodization treatment are suitably selected without any restriction depending on a number, size, aspect ratio and the like of nanoholes to be formed. For example, the electrolyte for use is preferably diluted phosphoric acid solution in the case where a spacing (pitch) between adjacent nanohole allays is 150 nm to 500 nm. In the case where it is 80 nm to 200 nm, the electrolyte is preferably diluted oxalic acid solution. In the case where it is 10 nm to 150 nm, the electrolyte is preferably diluted sulfuric acid solution. In any of these cases, the aspect ratio of the nanohole can be adjusted by immersing the layer in phosphoric acid solution after the anodization treatment so as to increase the diameter of the nanohole.

The nanohole may be a hole piercing through the aluminum deposition layer, or a hole (cavity) which does not pierce through the layer.

The arrangement of the nanohole(s) is suitably selected depending on the intended purpose without any restriction. For example, it is preferably that the nanoholes are arranged parallel in one direction.

The spacing between the adjacent nanoholes (arrays) is suitably adjusted depending on the intended purpose without any restriction. It is preferably 5 nm to 500 nm, and more preferably 10 nm to 200 nm.

The aperture size of the nanohole is suitably adjusted depending on the intended purpose without any restriction. It is preferably 1 nm to 50 nm, and more preferably 5 nm to 30 nm.

The depth of the nanohole is suitably adjusted depending on the intended purpose without any restriction. It is preferably 10 nm to 1,000 nm, and more preferably 10 nm to 100 nm.

The aspect ratio (depth/aperture size) of the nanohole is suitably selected depending on the intended purpose without any restriction. It is preferably 1.5 or more, and more preferably in the range to 3 to 15.

The aluminum deposition layer is subsequentially subjected to electroforming treatment so as to fill the nanohole with metal to thereby form a metal nanorod. The major axis of the thus obtained metal nanorod is obliquely orientated relative to the plane of the base.

The other steps in the forming method of the glass for use in the present invention include a base forming step, an antireflection layer forming step, a quarter-wave plate forming step, a half-wave plate forming step, and the like.

-Use and the like of the glass-

As has been mentioned above, the glass of the present invention contains the polarizing layer in which the major axis of the polarizer is orientated obliquely to the plane (horizontal plane) of the base, and has excellent optical anisotropy (e.g. anisotropic absorbance, anisotropic scattering, polarizing property, birefringence etc.). Therefore, the glass of the present invention can be widely used in various fields, such as glass for various means of traveling, and construction glass, e.g. openings, partitions, and the like, of buildings such as conventional housings, complex housings, office buildings, shops, public facilities, factories, and the like. The glass of the present invention is particularly suitably used for the windshield of the means of traveling which will be described below, as background reflections of images

(shadows) of the structures inside the means of traveling can be prevented by reduced the reflection on the back surface.

-Mechanism for preventing background reflection-

In the case where the glass of the present invention is used for a windshield of a means of traveling such as a car, as shown in FIG. 3, the polarizing layer 2 is preferably formed on a surface of the glass base which constitutes the windshield opposite to the side where sun light is incident on. In the case where the windshield is a laminate glass containing an intermediate layer between two sheets of plate glass, it is preferable that the polarizing layer 2 is arranged as the intermediate layer as shown in FIG. 6, or the polarizing layer 2 is formed on a surface (back surface) of the laminate glass opposite to the light incident side as shown in FIG. 7. In FIGs. 3, 6, and 7, each of 1, 1a, and 1b denotes a glass, 3 denotes an antireflection film, 5 denotes a dashboard, 6 denotes an intermediate layer, and 7 denotes a quarter-wave plate.

In the case where the glass of the present invention is used for a windshield of a means of traveling, as shown in FIG. 3, an angle between the windshield of the means of traveling and a surface (horizontal standard plane) of the dashboard 5 is preferably 20 degrees to 50 degrees, more preferably 20 degrees to 40 degrees, and even more preferably 25 degrees to 35 degrees for the purpose of reducing the aerodynamic drag.

The means of traveling is suitably selected depending on the intended purpose without any restriction, provided that the windshield of the means of traveling and the horizontal standard plane make an angle of 20 degrees to 50 degrees. Examples thereof include a car, a bus, a truck, a train, a bullet train, an aircraft, a passenger aircraft and a ship, and the like. Among these, the car is particularly preferable.

Moreover, as shown in FIG. 3, the average orientation of the major axis of the polarizer is such that the major axis of the polarizer is orientated at an angle of preferably ±30 degrees, more preferably ±20 degrees, relative to visual line of the driver who drives the means of traveling to the surface of the windshield. In the case where the aforementioned angle is within ±30 degrees, it is preferable as the absorbance of the polarizer is not visually appeared.

Hereinafter, the mechanism for preventing background reflections in the case where the glass of the present invention is used for a windshield of a car will be explained with reference to FIG. 3. As mentioned above, the windshield 1 is generally disposed so as to have an angle of approximately 30 degrees to the horizontal standard plane. In this case, the shadow of the dashboard 5 present in the car, which is visible to the driver at the time of driving, is a light which reflects on the inner surface of the windshield at an incident angle of approximately 60 degrees. Note that the incident angle is determined in a manner that the incident angle is 0 degree when the light is incident on the surface of the glass at an angle of 90 degrees.

With regard to the polarizing layer 2 in which the polarizer P is obliquely orientated relative to the horizontal plane of the glass, the minimum transmittance is 50% measured from any elevation angle and any azimuth angle.

The sunlight $I_0$ can be determined by dividing into the horizontally polarized component Teo, and polarized component $Tm_0$ vertical to the horizontally polarized component Teo. After the sunlight $I_0$ is passed through the polarizer P, $Tm_0$ is absorbed by the polarizer P and thus the sunlight $I_0$ becomes only Teo. Thereafter, Teo is passed through the quarter-wave plate 7, is modulated to the circularly polarized light, and transmitted onto the dashboard 5.

If the reflectance of the dashboard 5 is assumed to be 10% and the reflectance of the antireflection film 3 is assumed to be 3% at an angle of 60 degrees, the light $I_6$ coming to the eyes of the driver is determined in the following manner, and is 0.15%.

$$I_6 = 0.03 \cdot 0.10 \cdot 1/2 \cdot Te_0$$

$$= 0.0015 Te_0$$

The light passed through the antireflection film 3 is then passed through the quarter-wave plate 7 once again, and is modulated to the vertically polarized component Tm2'. Since the polarizer P has an absorbance of 100% with respect to the vertically polarized component, Tm2' is completely absorbed, and $I_3$ of FIG. 3 has practically light intensity of 0 (zero).

As a consequence, the reflected light $I_5$ of back surface becomes 0 (zero), and thus the background reflection can be prevented.

In the case where the polarizing layer 2 is sandwiched with two half-wave plates 8a, 8b, as shown in FIG. 4, the background reflection can be solved based on the following mechanism.

The sunlight $I_0$ can be considered as a sum of two components, the horizontally polarized component Teo, and the vertically polarized component Tmo. The sunlight $I_0$ is passed through the glass 1a and the half-wave plate 8a as it is, and then passed through the polarizer P contained in the polarizing plate 2 so that $Tm_0$ is absorbed and the

sunlight $I_0$ becomes only Teo. Teo is then passed through the half-wave plate 8b so that it is sifted at 90 degrees and modulated to $Tm_1$, and $Tm_1$ is passed through the glass 1b and is transmitted onto the dashboard 5.

The light $Tm_2$ reflected from the dashboard 5 is returned to the glass 1b. At this time, the incident angle of the light $Tm_2$ is in the range of 50 degrees to 70 degrees in the recent models of the car, which is around Brewster's angle. The reflective component of $Tm_2$ is extremely small, and thus almost all of it is passed through to head for the half-wave plate 8b.

Note that, the aforementioned Brewster's angle is an incident angle at which the light reflected on a boundary of two materials having mutually different refractive indexes is completely polarized.

When the light is incident on the boundary of two materials having different refractive indexes at an angle, a polarized component which is parallel to the incident angle (p-polarized light) and a polarized component which is vertical to the incident angle (s-polarized light) have mutually different reflectance. As shown in FIG. 5, p-polarized light is reduced down to 0 at Brewster's angle, and then p-polarized light is increased with the increase of the angle after Brewster's angle. S-polarized light is simply increased with the increases of the angle. The Brewster's angle of the visible light which is incident from the air having a refractive index of 1 to the glass having a refractive index of 1.46 is approximately 56 degrees.

$Tm_2$ is sifted at 90 degrees at the time of passing through the half-wave plate 2b, and is modulated to $Te_3$. $Te_3$ is passed through the polarizer P as it is, and is passed through the half-wave plate 8a so that it is sifted at 90 degrees and is modulated to $Tm_3$. Therefore, when $Tm_3$ is passed through the glass 1a, it has an angle around Brewster's angle, and thus most of it is transmitted and released to outside. In this regard, if the polarizer P has absorbance of 50%, the reflectance to the inner side is close to 0% in accordance with the aforementioned mechanism, while maintaining the transmittance with respect to the front view coming into the driver's eyes. However, residual reflective component is remained due to slight orientation failure or wavelength dipersibility of the half-wave plate which are lead from the nature of its design. Therefore, it is effective to dispose the antireflection layer 3 on the inner surface of the glass 1b.

As explained above, in the case where the glass of the present invention is used for a windshield of means of traveling such as a car or the like, background reflections such as reflections of structures inside the car can be prevented, and thus the front visibility of the driver can be maintained for the safety.

In accordance with the present invention, the problems in the art can be solved, and there is provided a glass, which is suitably used for a windshield of a means of traveling such as a car, improves a safety as a result of significantly improved the total effect of antireflection, has an excellent light fastness, and improves aesthetic designs of dashboard.

## Examples

Hereinafter, the examples of the present invention will be described, which however shall not be construed as limiting the invention thereto.

### (Example 1)

<Preparation of glass attached with a polarizing film in which gold nanorod is orientated in accordance with a guest-host liquid crystal method>

-Preparation of an orientation film-

On a clean surface of white plate glass having a side length of 30 cm and a thickness of 6.0 mm, polyvinyl alcohol (PVA) coating solution (methanol solution) of an orientation film was coated by spin coating at 1,000 rpm for 30 seconds, and then the coated layer was dried at 100°C for 3 minutes so as to prepare a PVA film having a thickness of 1.0 μm. The surface of the PVA film was subjected to a rubbing treatment twice by means of a rubbing machine (manufactured by Joyo Engineering Co., Ltd., a revolution speed of 1,000 rpm, an elevation height of 0.35 mm), to thereby prepare a PVA orientation film.

-Preparation of a coating solution of a polarizing film-

To a liquid crystal solution in which 3.04 g of a liquid crystal compound having a photopolymerizable group (product name: PALIOCOLOR LC242, manufactured by BASF Japan Ltd.) and 0.1 g of a polymer surfactant (MEGAFACE F780F, manufactured by DIC Corporation) had been dissolved in 5.07 g of methylethylketone (MEK), there was added 1.11 g of an initiator solution (a solution in which 0.90 g of IRGACURE 907 (manufactured by Chiba Japan K.K.) and 0.30 g of KAYACURE DETX (manufactured by Nippon Kayaku Co. Ltd.) had been dissolved in 8.80 g of methylethylketone (MEK)), then the mixture was stirred for 5 minutes so as to completely dissolve the solutes.

To the thus obtained solution, there was added 2.5 g of 5.0% by mass toluene solution of gold nanorod (product

name: Au-3, manufactured by Mitsubishi Material o., Ltd., major axis length: 27 nm, minor axis length: 13 nm, aspect ratio: 2.1), and the mixture was stirred for 5 minutes to thereby prepare a coating solution of a polarizing film.

-Orientating and curing of gold nanorod-

The thus obtained coating solution of the polarizing film was spincoated on the PVA orientation film at 500 rpm for 15 seconds, and the thus obtained coated layer was heated by placing the coated layer on a hot plate so as to contact an opposite side of the film to the surface of the coated layer with the hot place at 90°C for 1 minute. Thereafter, the coated layer was exposed to ultraviolet (UV) radiation (high-pressure mercury lamp, 1kW, 330 $mJ/mm^2$) while being heated, to thereby form a polarizing film having a thickness of 2.5 μm, in which the gold nanorod was orientated.

<Orientation of gold nanorod>

A cut piece was taken from the thus obtained polarizing film and the cut piece was observed under a transmission electron microscope (TEM) (JEM-2010, manufactured by NEOL Ltd.), then it was found that, among 500 pieces of the nanorod, 80% by number or more of them were orientated at $55 \pm 5$ degrees relative to plane of the glass (horizontal plane).

-Formation of a quarter-wave plate-

On the thus obtained polarizing layer, a quarter-wave plate having a thickness of 80 μm was formed in the following manner. Note that, the retardation axis of the quarter-wave plate has an angle of 45 degrees relative to the polarizing axis.

<Preparation of a quarter-wave plate>

A polycarbonate film (product name: PURE-ACE, manufacturer: Teijin Chemicals Ltd.) was heated and drawn so as to adjust the birefringence (retardation value at 550 nm) thereof to 138 nm to thereby a quarter-wave plate

-Formation of an antireflection film-

An antireflection film was formed on the thus obtained polarizing film as described below. In this manner, the glass attached with the polarizing film in which the gold nanorod was orientated of Example 1 was prepared.

<Formation of an antireflection film>

In a vacuum chamber, metal titanium (Ti) and n-Si (phosphor-doped monocrystal) having specific resistance of 1.2 Q-cm were disposed on a cathode as a target, and the gas present in the vacuum chamber was removed till the inner atmospheric pressure was reached to $1.3 \cdot 10^{-3}$ Pa ($1 \cdot 10^{-5}$ Torr). Onto a transparent soda lime glass substrate (thickness: 2 mm) disposed in the vacuum chamber, an antireflection film was formed on the polarizing film in the following manner.

(1) At first, a mixed gas (10% nitrogen) of argon and nitrogen was introduced as a discharge gas, and the conductance was adjusted so that the pressure was to be 0.27 Pa ($2 \cdot 10^{-3}$ Torr). Sequentially, negative DC voltage was applied to the cathode of Ti, then there was formed a titanium nitride film (light absorption film, extinction coefficient in the region of visible light: 0.5 or more, extinction coefficient at wavelength of 550 nm: 1.26, refractive index: 1.9) having a thickness of 7.2 nm as a result of DC sputtering of Ti target.

(2) The introduction of the gas was terminated and the inner atmosphere was controlled at the state of high vacuum in the vacuum chamber, then a mixed gas (33% nitrogen) of argon and nitrogen was introduced as a discharge gas and the conductance was adjusted so that the pressure was to be 0.27 Pa ($2 \cdot 10^{-3}$ Torr). Sequentially, pulsed DC voltage was applied to the cathode of Si from a DC source via SPARCLE-V (manufactured by Advanced Energy Industries Inc.), then there was formed a transparent silicon nitride film (transparent nitride film, extinction coefficient at wavelength of 550 nm: 0.01, refractive index: 1.93) having a thickness of 5 nm as a result of intermittent DC sputtering of Si target.

(3) The introduction of the gas was terminated and the inner atmosphere was controlled at the state of high vacuum in the vacuum chamber, then an oxygen gas (100%) of was introduced as a discharge gas and the conductance was adjusted so that the pressure was to be 0.27 Pa ($2 \cdot 10^{-3}$ Torr). Sequentially, pulsed DC voltage was applied to the cathode of Si from a DC source via SPARCLE-V (manufactured by Advanced Energy Industries Inc.), then there was formed a silicon oxide film (oxide film, refractive index at wavelength of 550 nm: 1.47) having a thickness of

122 nm as a result of intermittent DC sputtering of Si target.

-Evaluation of optical characteristics-

The thus obtained glass attached with the polarizing film was evaluated in terms of its characteristics in the following manner. The results are shown in Table 1.

<Evaluation of background reflections>

As shown in FIG. 8, the prepared glass with polarizing film 11 was fixed on a soda-lime glass 12 having a thickness of 6 mm so as to make the side of the polarizing film face down and to have an angle of 30 degrees to a horizontal standard plane, and it was exposed with the light having a wavelength of 632.8 nm emitted from a light source 10 (He-Ne laser) and the power received with a photodetector 13 was measured. The background reflections were evaluated by representing the amount of the reduced light with dB comparing with the case of raw glass as an index. As the photodetector 13, an optical sensor (AQ2741, Ando Electric Co., Ltd.) was used and it was placed in Multimeter AQ2140 via OPM unit AQ2730. <Evaluation of light fastness>

The exposure test was conducted by using an ultrahigh pressure mercury lamp. The light fastness was evaluated by the variations of the value of the background reflections after 1,000 hours from the exposure.

(Example 2)

<Preparation of glass with a polarizing film in which gold nanorod is orientated>

-Preparation of an orientation film-

On a surface of a clean triacetyl cellulose (TAC) film (manufactured by Fuji Photo Film Co., Ltd.) having a thickness of 100 μm, polyvinyl alcohol (PVA) coating solution (methanol solution) of an orientation film was coated by bar coating, and then the coated layer was dried at 100°C for 3 minutes so as to prepare a PVA film having a thickness of 1.0 μm. The surface of the PVA film was subjected to a rubbing treatment twice by means of a rubbing machine (manufactured by Joyo Engineering Co., Ltd., a revolution speed of 1,000 rpm, an elevation height of 0.35 mm), to thereby prepare a PVA orientation film.

The polarizing film in which a gold nanorod was orientated was prepared in the same manner as in Example 1, provided that the thus obtained TAC base having the PVA orientation film thereon was used as a base.

<Orientation of gold nanorod>

A cut piece was taken from the thus obtained polarizing film and the cut piece was observed under a transmission electron microscope (TEM) (JEM-2010, manufactured by NEOL Ltd.), then it was found that, among 500 pieces of nanorod, 80% by number or more of them were orientated at 55±5 degrees relative to plane of the base (horizontal plane).

Thereafter, the film attached with the polarizing layer of Example 2 was prepared by disposing a quarter-wave plate and an antireflection film to the thus obtained polarizing film in the same manner as in Example 1.

The various characteristics of the thus obtained polarizing film and film with the polarizing film were evaluated in the same manner as in Example 1. The results are shown in Table 1.

(Example 3)

The film attached with the polarizing layer of Example 3 was prepared in the same manner as in Example 2, provided that the quarter-wave plate was replaced with a half-wave plate as described below and the polarizer was sandwiched with two half-wave plates.

<Preparation of half-wave plate>

A polycarbonate film (product name: PURE-ACE, manufactured by Teijin Chemicals Ltd.) was heated and drawn so as to adjust the birefringence (retardation value at 550 nm) thereof to 275 nm to thereby a half-wave plate.

The various characteristics of the thus film with the polarizing film were evaluated in the same manner as in Example 1. The results are shown in Table 1.

(Example 4)

<Preparation of a film with a polarizing film in which carbon nanotube is orientated in accordance with a guest-host method>

A polarizing film in which carbon nanotube was orientated was prepared in the same manner as in Example 2, provided that the following coating solution of the polarizing film containing a carbon nanotube was used, and the orientating and curing of the carbon nanotube were carried out.

-Preparation of a coating solution of a polarizing film-

To a liquid crystal solution in which 3.04 g of a liquid crystal compound having a photopolymerizable group (product name: PALIOCOLOR LC242, manufactured by BASF Japan Ltd.) and a polymer surfactant (MEGAFACE F780F, manufactured by DIC Corporation) had been dissolved in 5.07 g of methylethylketone (MEK), there was added 1.11 g of an initiator solution (a solution in which 0.90 g of IRGACURE 907 (manufactured by Chiba Japan K.K.) and 0.30 g of KAYACURE DETX (manufactured by Nippon Kayaku Co. Ltd.) had been dissolved in 8.80 g of methylethylketone (MEK)), then the mixture was stirred for 5 minutes so as to completely dissolve the solutes.

To the thus obtained solution, there was added 1.0 g of carbon nanotube (manufactured by Sigma-Aldrich Japan K.K., major axis length: 300-500 nm, minor axis length: 5-10 nm, aspect ratio: 30-100), and the mixture was stirred for 30 minutes so as to disperse the carbon nanotube, to thereby prepare a coating solution of a polarizing film.

-Orientating and curing of carbon nanotube-

The thus obtained coating solution of the polarizing film was bar-coated, and the thus obtained coated film was heated by placing the coated layer on a hot plate so as to contact an opposite surface of the film to the surface of the coated layer with the hot place at 90°C for 1 minute. Thereafter, the coated layer was exposed to ultraviolet (UV) radiation (high-pressure mercury lamp, 1kW, 330 mJ/$mm^2$) while being heated, to thereby form a polarizing film having a thickness of 3.4 μm, in which the carbon nanotube was orientated.

<Orientation of carbon nanotube>

A cut piece was taken from the thus obtained polarizing film and the cut piece was observed under a transmission electron microscope (TEM) (JEM-2010, manufactured by NEOL Ltd.), then it was found that, among 500 pieces of carbon nanotube, 80% by number or more of them were orientated at 55±5 degrees to plabe of the base (horizontal plane).

Thereafter, an antireflection film was formed on the thus obtained polarizing film in the same manner as in Example 1 to thereby prepare the film attached with the polarizing film.

The various characteristics of the thus obtained film attached with the polarizing film were evaluated in the same manner as in Example 1. The results are shown in Table 1.

(Example 5)

<Preparation of film attached with polarizing layer in which gold nanorod is orientated in accordance with aluminum anodization method>

-Formation of transparent conductive film-

On a clean surface of white plate glass having a side of 30 cm and a thickness of 6.0 mm, an ITO (Tin-doped Indium oxide) film was formed to have a thickness of 120 nm, to thereby prepare the glass base attached with the transparent conductive film having a resistance of 10 Ω/square.

-Formation of aluminum deposition film-

On the surface of the transparent conductive film which was attached to the glass base, an aluminum deposition film having a thickness of 150 nm was formed by RF sputtering. At the time of deposition, the deposition angle was set at 75 degrees.

-Formation of nanohole by nanodization-

The glass base attached with the transparent conductive film and aluminum deposition film was subjected to voltage electrolysis in 0.3M aqueous solution of oxalic acid at DC 10V for 30 minutes to thereby obtain an anodized film formed with nanoholes having an average aperture size of 20 nm, average depth of 100 nm and average aspect ratio of 5.

-Formation of gold nanorod by electroforming-

The glass base attached with the anodized film to which nanoholes were formed was immersed in 0.5 mM of $HAuBr_4$ aqueous solution which had been controlled to have a pH value of 2.5 using $H_2SO_4$, and was subjected to electrolysis at the solution temperature of 20°C and AC of 10V for 10 minutes to thereby electrodeposit nanorod in each nanohole. Note that, a counter electrode was a carbon plate at the time of electrolysis. Since the electrodeposited nanorods were varied in length corresponding to the depth of the nanoholes, there were parts which gold was flown over the surface. Therefore, the surface was slightly polished by reverse sputtering so as to make the length of nanorods even.

<Orientation of gold nanorod>

A cut piece was taken from the thus obtained anodized film and the cut piece was observed under a transmission electron microscope (TEM) (JEM-2010, manufactured by NEOL Ltd.), then it was found that, among 500 gold nanorods, 80% by number or more of them were orientated at 55±5 degrees to the horizontal plane of the film.

Thereafter, to the thus obtained gold nanorod polarizing film, a quarter-wave plate and an antireflection film were applied in the same manner as in Example 1, to thereby a film attached with the polarizing film of Example 5.

The various characteristics of the thus obtained film attached with the polarizing film were evaluated in the same manner as in Example 1. The results are shown in Table 1.

(Example 6)

<Preparation of film attached with polarizing layer in which gold nanorod is orientated in accordance with aluminum anodization method>

-Formation of transparent conductive film-

On a clean surface of triacetyl cellulose (TAC) film (manufactured by Fuji Photo Film Co., Ltd.) having a thickness of 80 μm, an ITO (Tin-doped Indium oxide) film was formed to have a thickness of 120 nm by means of a roll vapor coater, to thereby prepare the TAC film attached with the transparent conductive film having a resistance of 10 Ω/square.

-Formation of aluminum deposition film-

On the surface of the transparent conductive film which was attached to the TAC film, an aluminum deposition film having a thickness of 150 nm was formed by RF sputtering by means of a roll vapor coater. At the time of deposition, the vapor source was positioned so as not to be below the film, namely located in the place where has a deposition angle of 15 degrees in the width direction at the further edge, and 30 degrees at the closer edge. In the length direction, the angle of the deposition mask was changed every 2 m in the range of +15 degrees to -80 degrees, to thereby prepare an aluminum deposition film in which the deposition angle was changed relative to the horizontal plane of the TAC film. As a result of this operation, the deposition film cut out every 2 m and applied to a windshield became a film in which the deposition columns were horizontally orientated relative to the visual line of the driver at the time of driving the means of traveling.

-Formation of nanohole by nanodization-

The glass base attached with the transparent conductive film and aluminum deposition film was subjected to constant voltage electrolysis in 0.3M aqueous solution of oxalic acid at DC 10V for 30 minutes to thereby obtain an anodized film formed with nanoholes having an average aperture size of 20 nm, average depth of 100 nm and average aspect ratio of 5.

-Formation of gold nanorod by electroforming-

The glass base attached with the anodized film to which nanoholes were formed was immersed in 0.5 mM of $HAuBr_4$ aqueous solution which had been controlled to have a pH value of 2.5 using $H_2SO_4$, and was subjected to electrolysis at the solution temperature of 20°C and AC of 10V for 10 minutes to thereby electrodeposit nanorod in each nanohole. Note that, a counter electrode was a carbon plate at the time of electrolysis.

<Orientation of gold nanorods>

A cut piece was taken from the thus obtained anodized film and the cut piece was observed under a transmission electron microscope (TEM) (JEM-2010, manufactured by NEOL Ltd.), then it was found that the major axis of gold nanorod was orientated at angle of ±5 degrees relative to a visual line of a driver to the windshield at the time of driving the means of traveling.

Thereafter, the thus obtained gold nanorod polarizing film was sandwiched between two half-wave plates in the same manner as in Example 2, to thereby a film attached with the polarizing film of Example 6. Note that, the retardation axis and the polarizing axis made an angle of 45 degrees, and no antireflection film was disposed.

The various characteristics of the thus obtained film attached with the polarizing film were evaluated in the same manner as in Example 1. The results are shown in Table 1.

(Example 7)

-Preparation of laminated glass-

The polarizing film of Example 2 was sandwiched with two sheets of transparent float glass, and the thus obtained laminate structure was placed in a rubber bag and degassed at vacuum of 2,660 Pa for 20 minutes. The rubber bag was moved to an oven while being degassed, and was vacuum-pressed while maintaining the temperature at 90°C for 30 minutes. The preliminary pressed laminated glass was pressed in an autoclave for 20 minutes under the conditions of the temperature being 135°C and pressure being 118 $N/cm^2$, to thereby obtain a laminated glass.

Thereafter, an antireflection film was formed on the thus obtained laminated glass in the same manner as in Example 1 to thereby prepare the glass attached with the polarizing film of Example 7.

The various characteristics of the thus obtained glass with the polarizing film were evaluated in the same manner as in Example 1. The results are shown in Table 1.

(Example 8)

-Preparation of laminated glass-

The polarizing film of Example 3 was sandwiched with two sheets of transparent float glass, and the thus obtained laminate structure was placed in a rubber bag and degassed at vacuum of 2,660 Pa for 20 minutes. The rubber bag was moved to an oven while being degassed, and was vacuum-pressed while maintaining the temperature at 90°C for 30 minutes. The preliminary pressed laminated glass was pressed in an autoclave for 20 minutes under the conditions of the temperature being 135°C and pressure being 118 $N/cm^2$, to thereby obtain a laminated glass.

Thereafter, an antireflection film was formed on the thus obtained laminated glass in the same manner as in Example 1 to thereby prepare the glass attached with the polarizing film of Example 8.

The various characteristics of the thus obtained glass with the polarizing film were evaluated in the same manner as in Example 1. The results are shown in Table 1.

(Comparative Example 1)

A glass attached with an antireflection film of Comparative Example 1 was prepared in the same manner as in Example 1, provided that the polarizing film in which gold nanorod was orientated was not disposed.

The various characteristics of the thus obtained glass attached with the antireflection film were evaluated in the same manner as in Example 1. The results are shown in Table 1.

(Comparative Example 2)

A glass attached with a polarizing film of Comparative Example 2 was prepared in the same manner as in Example 7, provided that an iodine-PVA polarizing plate (manufactured by Sanritz Corporation) was used as a polarizing

film.

The various characteristics of the thus obtained glass attached with the polarizing film were evaluated in the same manner as in Example 1. The results are shown in Table 1.

Table 1

| | Background reflections (dB) | Light fastness (dB) |
|---|---|---|
| Ex. 1 | -3.6 | -3.4 |
| Ex. 2 | -3.6 | -3.4 |
| Ex. 3 | -4.5 | -4.3 |
| Ex. 4 | -3.4 | -3.1 |
| Ex. 5 | -3.8 | -3.6 |
| Ex. 6 | -4.1 | -4.0 |
| Ex. 7 | -3.9 | -3.9 |
| Ex. 8 | -4.5 | -4.5 |
| Com. Ex. 1 | 0.0 | 0.0 |
| Com. Ex. 2 | -4.5 | -0.2 |

Industrial Applicability

The glass of the present invention are suitably used for a windshield of means of traveling such as a car. Since reflections of interior structures caused by background reflections can be prevented, the excellent safety can be provided and it enables to apply a highly designable dashboard having bright colors or patterns which have not been able to apply in the conventional means of traveling. Accordingly, the glass of the present invention can be suitably for various uses, such as a windshield of various means of traveling such as a car, a train, a bullet train, an aircraft, and the like.

## Claims

**1.** A glass, comprising:

a base; and
a polarizing layer comprising at least a polarizer,
wherein the polarizer has an aspect ratio of 1.5 or more, and a major axis of the polarizer is obliquely orientated relative to a plane of the glass base.

**2.** The glass according to claim 1, wherein the major axis of the polarizer is orientated at an angle of ±30 degrees or more but less than ±80 degrees relative to the plane of the base.

**3.** The glass according to any one of claim 1 or 2, wherein the polarizer is aligned at one direction in a plane of the polarizing layer, and the plane of the polarizing layer is vertical to the plane of the base.

**4.** The glass according to any one of claims 1 to 3, wherein the polarizing film is disposed on a side of the base opposite to a side thereof on which sun light is incident.

**5.** The glass according to any one of claims 1 to 3, wherein the base is a laminated glass which comprises two sheets of plate glass and an intermediate layer disposed between the two sheets of plate glass, and
wherein the intermediate layer is the polarizing layer.

**6.** The glass according to any one of claims 1 to 5, wherein the glass further comprises an antireflection film disposed on an outermost surface at a side of the base opposite to a side thereof on which sun light is incident.

**7.** The glass according to claim 6, wherein the glass further comprises a half-wave plate or a quarter-wave plate

deposed between the polarizing layer and the antireflection film.

**8.** The glass according to any one of claims 1 to 7, wherein the glass is applied for a windshield of a means of traveling.

**9.** The glass according to claim 8, wherein the means of traveling is a car.

**10.** The glass according to any one of claim 8 or 9, wherein the windshield is tilted at an angle of 20 degrees to 50 degrees relative a horizontal standard plane.

**11.** The glass according to any one of claims 8 to 10, wherein the major axis of the polarizer is orientated at an angle of ± 30 degrees relative a visual line of a driver of the car towards the windshield.

**12.** The glass according to any one of claims 1 to 11, wherein the polarizer comprises an anisotropic absorbing material.

**13.** The glass according to claim 12, wherein the anisotropic absorbing material is an anisotropic metal nanoparticle, or a carbon nanotube.

**14.** The glass according to claim 13, wherein a material of the anisotropic metal nanoparticle is at least one selected from the group consisting of gold, silver, copper and aluminum.

FIG. 1A

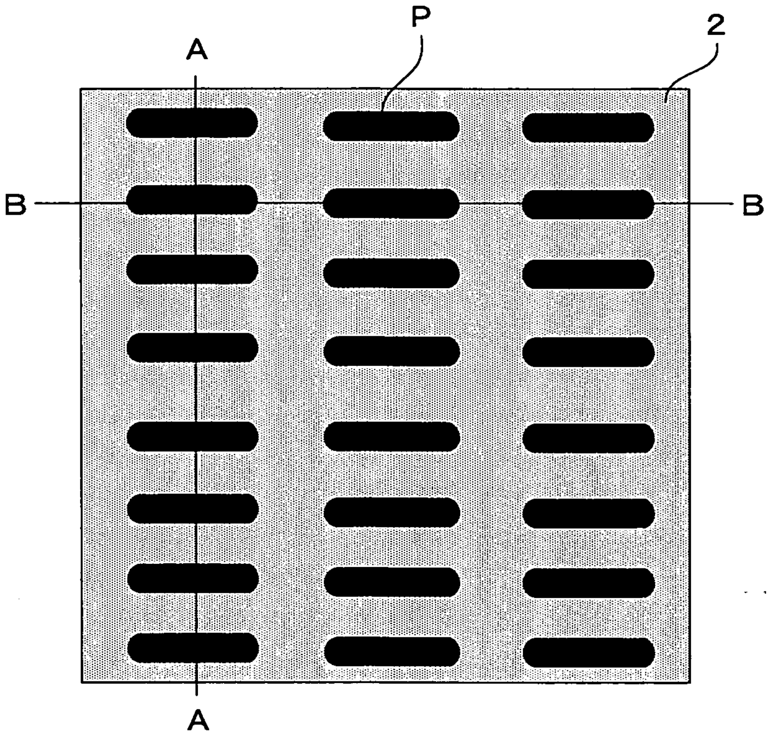


FIG. 1B

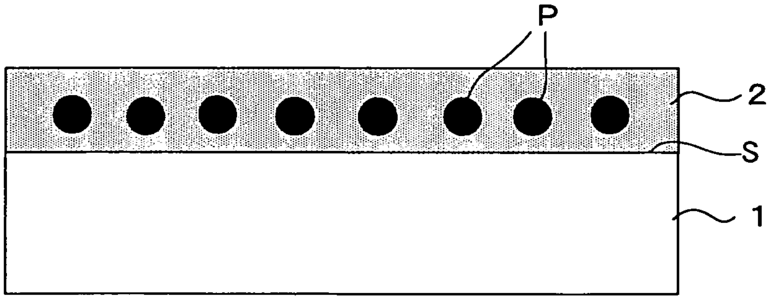

FIG. 1C

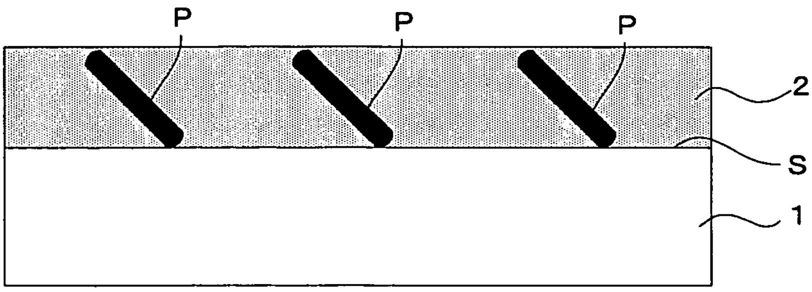


FIG. 1D

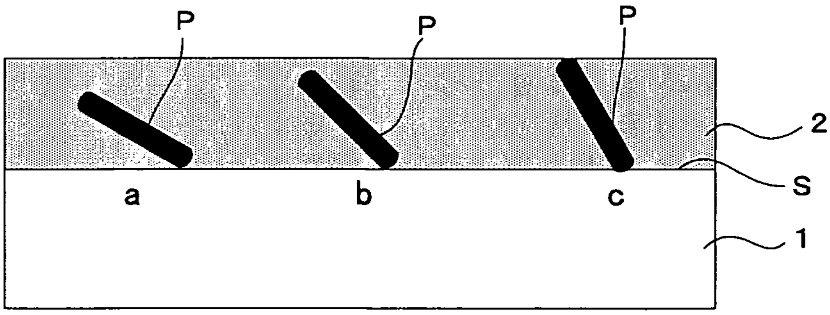

FIG. 2

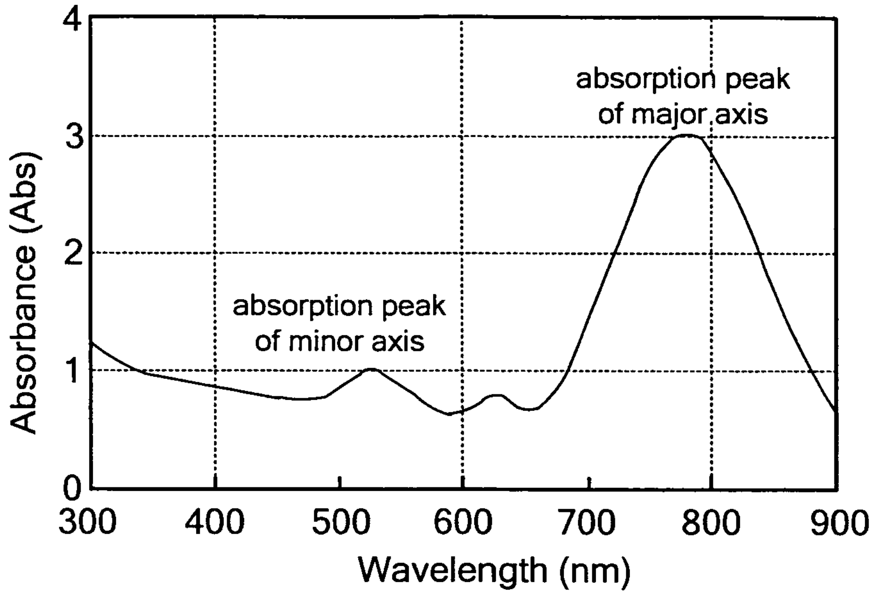
absorption peak
of major axis
absorption peak
of minor axis
Absorbance (Abs)
0
1
2
3
4
300
400
500
600
700
800
900
Wavelength (nm)

FIG. 3

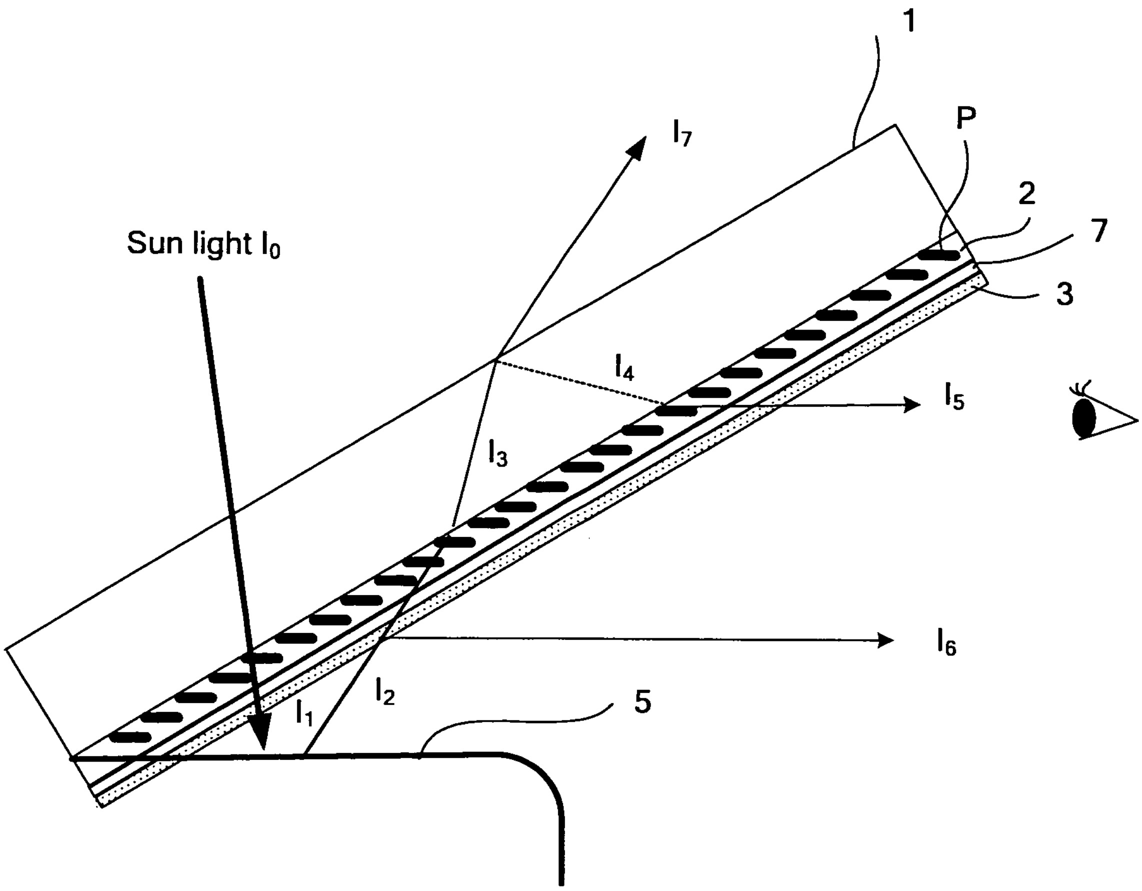

FIG. 4

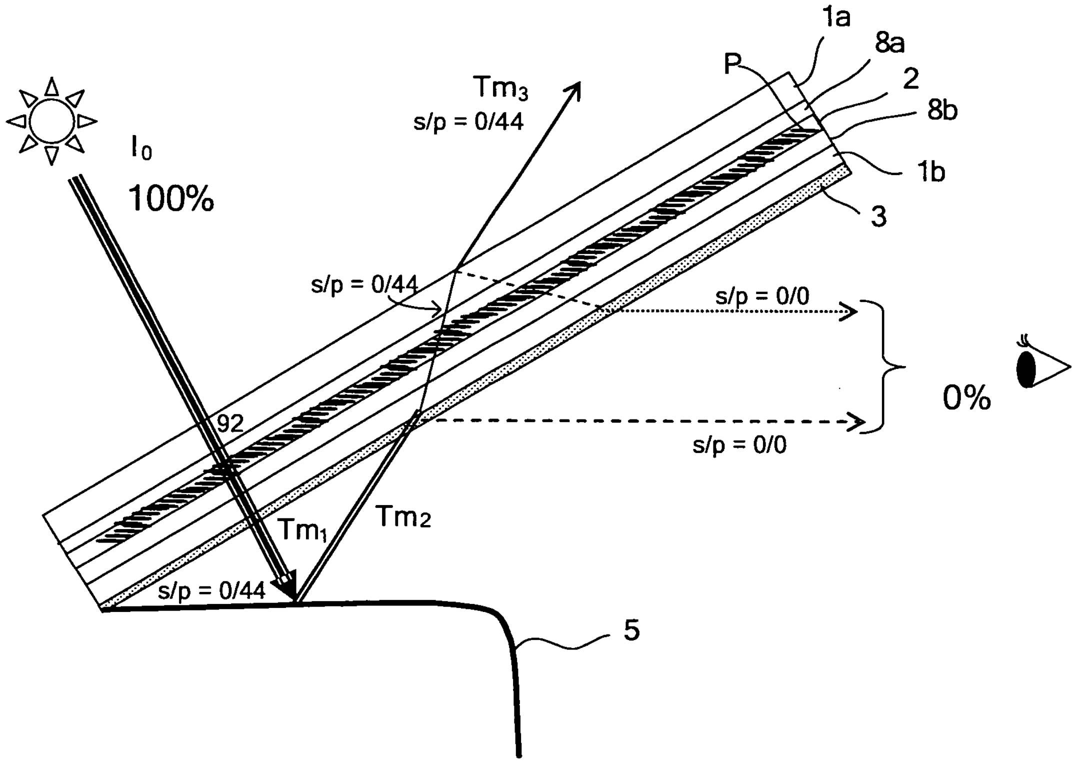
1a
8a
2
8b
1b
3
P
Tm3
s/p = 0/44
I0
100%
s/p = 0/44
s/p = 0/0
0%
92
s/p = 0/0
Tm1
Tm2
s/p = 0/44
5

FIG. 5

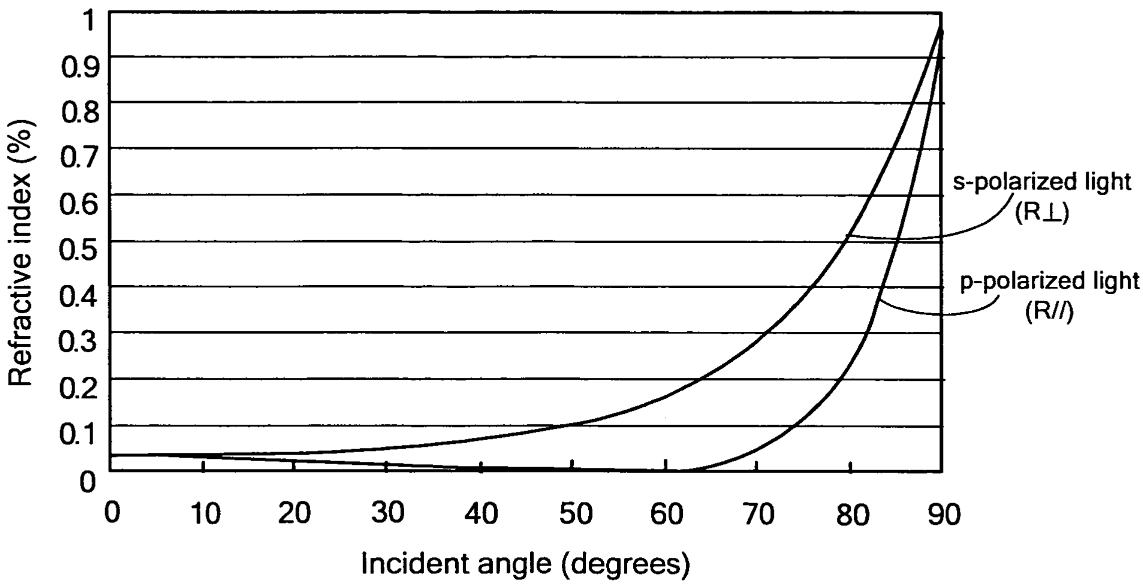
1
0.9
0.8
0.7
0.6
0.5
0.4
0.3
0.2
0.1
0
Refractive index (%)
0
10
20
30
40
50
60
70
80
90
Incident angle (degrees)
s-polarized light
(R⊥)
p-polarized light
(R//)

FIG. 6

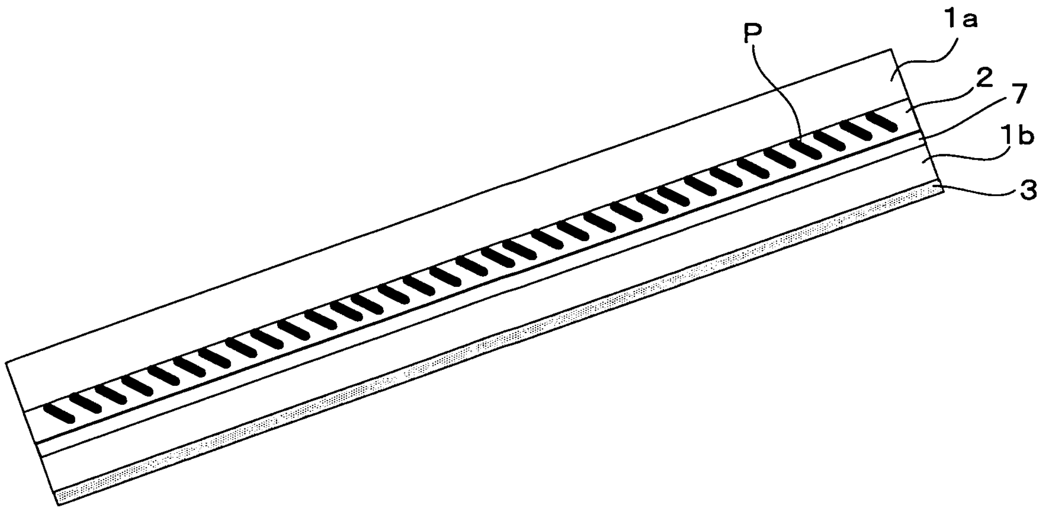


FIG. 7

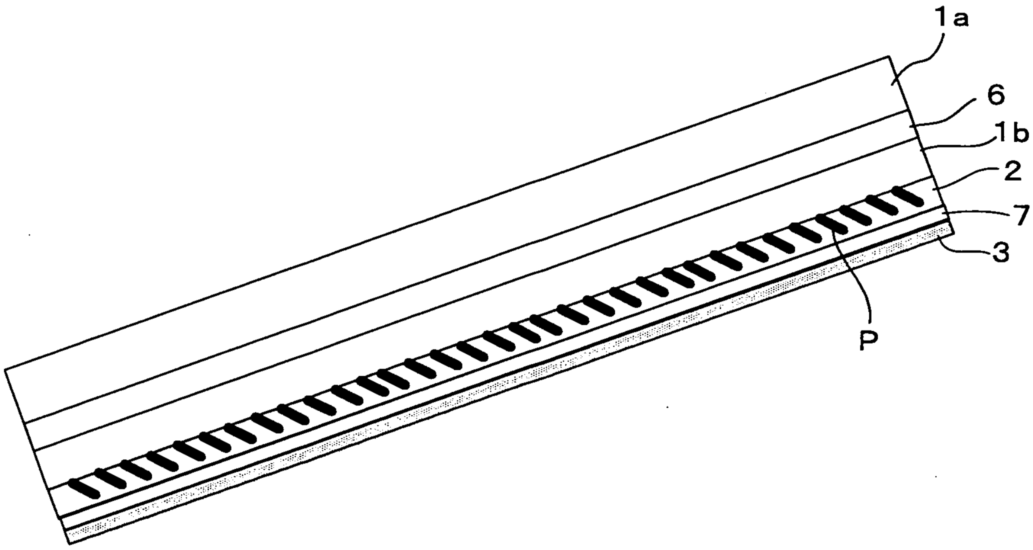

FIG. 8

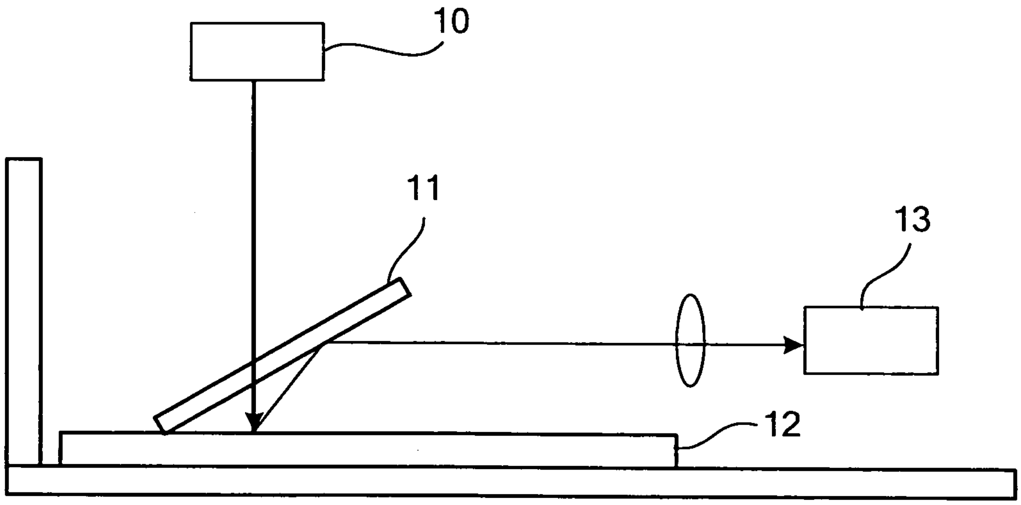

**INTERNATIONAL SEARCH REPORT**

International application No.
PCT/JP2007/058564

A. CLASSIFICATION OF SUBJECT MATTER
*G02B5/30*(2006.01)i, *B60J1/00*(2006.01)i, *B60J3/06*(2006.01)i, *C03C17/22*(2006.01)i, *C03C17/28*(2006.01)i, *C03C27/12*(2006.01)i

According to International Patent Classification (IPC) or to both national classification and IPC

B. FIELDS SEARCHED

Minimum documentation searched (classification system followed by classification symbols)
G02B5/30, B60J1/00, B60J3/06, C03C17/22, C03C17/28, C03C27/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-55226 A (Nippon Sheet Glass Co., Ltd.), 20 February, 2002 (20.02.02), Par. No. [0041]; Fig. 4<br>& US 2003/0025997 A1 & EP 1310806 A<br>& CN 1386206 A & CA 2385206 A | 1-3,12<br>4-6,8-10 |
| X<br>Y | JP 4-97104 A (Toyota Central Research and Development Laboratories, Inc.), 30 March, 1992 (30.03.92), Claims; Figs. 3 to 5<br>& US 5305143 A | 1-3,12<br>4-6,8-10 |
| Y | JP 49-14507 A (Hikari Seiko Co., Ltd.), 08 February, 1974 (08.02.74), Full text; all drawings<br>(Family: none) | 4-6,8-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>01 June, 2007 (01.06.07) | Date of mailing of the international search report<br>19 June, 2007 (19.06.07) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2007/058564

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-177381 A (Nippon Sheet Glass Co., Ltd.), 27 June, 2000 (27.06.00), (Family: none) | 4-6,8-10 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5069701 U
- JP 4357134 A
- JP 11295503 A
- JP 11153703 A
- JP 2000009908 A
- JP 2001310432 A
- JP 2001166104 A
- US 20030202137 A
- US 6210858 B
- JP 20022776069 A
- JP 2000047004 A
- JP 2001315242 A
- JP 2001031871 A
- JP 2001296401 A
- JP 2001293818 A
- JP 9222503 A
- JP 11038202 A
- JP 2001040284 A
- JP 2000284102 A
- JP 2004045462 A
- JP 11258403 A
- JP 58142958 A
- JP 58147483 A
- JP 58147484 A
- JP 9157582 A
- JP 11106704 A
- JP 2000117902 A
- JP 2001048590 A
- JP 2002053804 A
- JP 11003820 A
- JP 5027118 A
- JP 5027119 A
- JP 10068816 A
- JP 10090521 A
- WO 0026705 A
- WO 0065384 A


### Non-patent literature cited in the description


- **Y.-Y. YU ; S.-S. CHANG ; C.-L. LEE ; C. R. C. WANG.** *J. Phys. Chem. B,* 1997, vol. 101, 6661
- **N.R. JANA ; L. GEARHEART ; C. J. MURPHY.** *J. Phys. Chem. B,* 2001, vol. 105, 4065
- **F. KIM ; J.H. SONG ; P. YANG.** *J. Am. Chem. Soc.,* 2002, vol. 124, 14316
- *Journal of the Liquid Crystal Society of Japan,* 1999, vol. 3 (1), 3
- **MASAKI HASEGAWA.** *Journal of the Liquid Crystal Society of Japan,* 1999, vol. 3 (4), 262